# EUROPÄISCHE PATENTSCHRIFT

(11) **EP 3 980 357 B1**
(45) Veröffentlichungstag und Bekanntmachung des Hinweises auf die Patenterteilung: **08.05.2024**
(21) Anmeldenummer: 20728711.1
(22) Anmeldetag: 25.05.2020
(51) Int. Cl.: B65G 47/08, B65G 47/71, B65G 54/02, B65G 47/84

(54) **VERFAHREN UND VORRICHTUNG ZUM VERTEILEN UND/ODER GRUPPIEREN VON BEHÄLTERN**
METHOD AND DEVICE FOR DISTRIBUTING AND/OR GROUPING CONTAINERS
PROCÉDÉ ET DISPOSITIF DE DISTRIBUTION ET/OU DE GROUPEMENT DE RÉCIPIENTS

(30) Priorität: 05.06.2019 DE 102019115198
(43) Veröffentlichungstag der Anmeldung: 13.04.2022
(73) Patentinhaber: KRONES AG, 93073 Neutraubling (DE)
(72) Erfinder: ELSPERGER, Stefan, 93073 Neutraubling (DE); HARTL, Michael, 93073 Neutraubling (DE)
(74) Vertreter: v. Bezold & Partner Patentanwälte - PartG mbB
(86) Internationale Anmeldenummer: PCT/EP2020/064423
(87) Internationale Veröffentlichungsnummer: WO 2020/244951

(56) Entgegenhaltungen:
- EP-A1- 2 511 203
- EP-A1- 2 792 626
- EP-A2- 1 493 693
- DE-A1-102011 076 864
- DE-A1-102011 081 705
- DE-A1-102011 085 724
- DE-A1-102017 102 913

## Beschreibung

### Technisches Gebiet

Die Erfindung betrifft eine Vorrichtung und ein Verfahren zum Verteilen und/oder Gruppieren von Behältern in einer Behälterbehandlungsanlage.

### Technischer Hintergrund

In Behälterbehandlungsanlagen, beispielsweise in der Getränkeindustrie, werden die zu behandelnden Behälter häufig umverteilt oder umgruppiert, um beispielsweise mehrere parallel verarbeitbare Behälterströme oder Gebinde von Behältern zu erzeugen.

Die DE 10 2015 203 042 A1 offenbart eine Vorrichtung zum Verteilen und Gruppieren von Behältern in einer Behälterbehandlungsanlage. Die Vorrichtung weist eine Einlauffördereinrichtung mit einem einspurigen Einlaufstrom, eine Auslauffördereinrichtung mit einem mehrspurigen Auslaufstrom und ein Transferfördereinrichtung auf. Die Transferfördereinrichtung ist dazu ausgebildet, die Behälter einzeln und stehend durch gezieltes Führen mittels umlaufender Führungselemente von dem einspurigen Einlaufstrom auf den mehrspurigen Auslaufstrom aufzuteilen.

Die WO 2018/073529 A1 offenbart eine Vorrichtung zum Übertragen von Produkten, die ein Abgabemittel zum Abgeben der Produkte, das die Produkte nacheinander in eine Abgaberichtung bewegt, und ein Auslaufförderband, das sich von dem Abgabemittel quer zur Abgaberichtung erstreckt, umfasst. Die Vorrichtung umfasst ferner ein rotierendes Werkzeug, das sich um eine Drehachse parallel zur Förderrichtung dreht. Das Werkzeug weist radial um die Achse verteilte Kollektoren auf, die gemeinsam parallel zur Förderrichtung verschiebbar sind. Die Drehung des Werkzeugs bewirkt, dass jeder nachfolgende Kollektor eine Gruppe von Produkten von den Fördermitteln auf das Auslaufband freigibt.

Die DE 10 2011 076864 A1 offenbart eine Vorrichtung zum Aufnehmen, Transportieren und Abgeben von zwei, drei, vier oder mehr getrennten Behältern von einem einspurigen Startbereich zu einem, zwei, drei, vier oder mehr verschiedenen mehrspurigen Zielbereichen, mit einem, zwei oder mehr individuell angesteuerten und auf einer Beförderungsmöglichkeit geführten teilerköpfen. Das Aufnehmen der zwei, drei, vier oder mehr Behälter aus dem Startbereich durch einen Verteilerkopf kann gleichzeitig erfolgen.

Zum weiteren Stand der Technik wird auf die DE 10 2011 081705 A1, die EP 2 792 626 A1, die DE 10 2017 102913 A1, die DE 10 2011 085724 A1, die EP 1 493 693 A2 und die EP 2 511 203 A1 hingewiesen.

Nachteilig am bekannten Stand der Technik kann beispielsweise eine Leistungslimitierung durch das Risiko von umfallenden Behältern oder Behälterbeschädigungen beim Aufprall der Kollektoren auf die Behälter sein. Das Überführen erzeugt zwischen jeder Behälterreihe eine Lücke. Vielreihige Gebinde benötigen eine dementsprechend lang dimensionierte, stromabwärts angeordnete Gruppiervorrichtung. Die starre Teilung der Kollektoren schränkt die Flexibilität beim Überführen der mehreren Behälter zudem deutlich ein.

Der Erfindung liegt die Aufgabe zu Grunde, eine alternative und/oder verbesserte Technik zum Verteilen und/oder Gruppieren von Behältern zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Die Erfindung schafft eine Vorrichtung zum Verteilen und/oder Gruppieren von Behältern in einer Behälterbehandlungsanlage (z. B. zum Herstellen, Reinigen, Prüfen, Abfüllen, Verschlie-ßen, Etikettieren, Bedrucken und/oder Verpacken von Behältern für flüssige Medien, vorzugsweise Getränke oder flüssige Nahrungsmittel). Die Vorrichtung weist eine Einlauffördereinrichtung auf, die dazu ausgebildet ist, eine Vielzahl von Behältern in einem einspurigen Behältereinlaufstrom zu fördern (z. B mittels eines Förderbands). Die Vorrichtung weist eine Auslauffördereinrichtung auf, die dazu ausgebildet ist, die Behälter in einem mehrspurigen Behälterauslaufstrom quer (z.B. 90°) zum Behältereinlaufstrom oder der Einlaufförderrichtung abzufördern (z. B. mittels eines zweckmäßig einzigen Förderbands). Die Vorrichtung weist eine Transferfördereinrichtung auf, die eine (z. B. parallel zum Behälterauslaufstrom / der Auslauffördereinrichtung ausgerichtete und/oder umlaufende) Führungsbahn und mehrere, vorzugsweise mittels eines Langstator-Linearmotors, individuell (z. B. einzeln und voneinander unabhängig) antreibbare Bewegungsvorrichtungen aufweist. Die mehreren Bewegungsvorrichtungen sind entlang der Führungsbahn geführt. Die mehreren Bewegungsvorrichtungen weisen (z. B. jeweils oder zumindest teilweise) ein (z. B. ein- und ausfahrbares) Förderelement auf, das dazu ausgebildet ist, jeweils mehrere Behälter von der Einlauffördereinrichtung zu der Auslauffördereinrichtung zu überführen (vorzugsweise während sich die mehreren Bewegungsvorrichtungen entlang der Führungsbahn bewegen).

Die Vorrichtung kann durch die individuelle Bewegbarkeit der Bewegungsvorrichtungen die Erreichung einer Vielzahl von Vorteilen ermöglichen. Beispielsweise kann die Vorrichtung mittels einer Verzögerung der jeweiligen Bewegungsvorrichtung einen erheblich reduzierten elastischen Stoß, den das Förderelement beim Kontaktieren der mehreren Behälter auf die Behälter ausübt, bewirken. Dies kann - insbesondere bei kippgefährdeten Behältern - eine wesentlich höhere Durchsatzleistung und/oder ein schonenderes Behälterhandling ermöglichen. Die Bewegungsvorrichtungen können auch zum vorderseitigen Abstützen der mehreren Behälter bewegt werden, wodurch ebenfalls ein Kipprisiko beim Überführen verringert werden kann. Die Bewegungsvorrichtungen können auch zur Erzielung einer (Vor-)Gruppierfunktion bewegt werden, sodass eine stromabwärts angeordnete Gruppiervorrichtung kompakter ausgebildet oder sogar ganz weggelassen werden kann. Bei Verwendung eines Langstator-Linearmotors zum Antreiben der Bewegungsvorrichtungen können durch den getriebelosen, dezentralen und somit massenträgheitsärmeren Antrieb diese z. B. bei Überlast wesentlich sensibler und dynamischer stoppen. Somit kann eine geringere mechanische Belastung von Bewegungsvorrichtungen und Führungsbahn erreicht werden. Dies kann insbesondere relevant sein, wenn die Transferfördereinrichtung in einer Kragträgerbauweise konstruiert ist. Es ist auch möglich, eine Anzahl von Bewegungsvorrichtungen möglichst gering zu halten, da die Bewegungsvorrichtungen beispielsweise mit großer Teilung und großer Geschwindigkeit in einem Rückführabschnitt der Führungsbahn bewegt werden können.

Zweckmäßig kann es sich bei den Behältern um Dosen, Glasflaschen oder andere beispielsweise mit Deckel verschließbare Glasbehälter, Kunststoffflaschen, beispielsweise aus PET, Formbehälter, wie z. B. rechteckige PET-Behälter, Behälter aus Karton, oder Ähnliches handeln. Insbesondere können Behälter unterschiedlicher Größen, Querschnitte und/oder unterschiedlichen Gewichts mit der Vorrichtung und dem Verfahren gemäß der vorliegenden Offenbarung verteilt und/oder gruppiert werden.

Es ist möglich, dass eine Form und/oder eine Ausrichtung der Führungsbahn beliebig ist, solange ein Abschnitt der Führungsbahn (Arbeitsabschnitt) derart im Bereich eines Übergangs zwischen der Einlauffördereinrichtung und der Auslauffördereinrichtung angeordnet ist, dass jeweils mehrere Behälter aus dem Behältereinlaufstrom von den Führungselementen übernommen und auf die Auslauffördereinrichtung verteilt werden können. Vorzugsweise kann die Führungsbahn im Wesentlichen geschlossen sein, wobei im Wesentlichen geschlossen bedeutet, dass die jeweilige Führungsbahn mindestens einen geschlossenen Pfad zum Umlaufen für die mehreren Bewegungsvorrichtungen aufweist. Dies kann beispielsweise durch Bereitstellen eines Rückführabschnitts als Teil der Führungsbahn realisiert werden. Im Rückführabschnitt kann ein Rückführen der Bewegungsvorrichtungen zur Einlauffördereinrichtung nach Übergabe der Behälter an die Auslauffördereinrichtung ermöglicht sein. Neben einer Hauptstrecke können eine oder mehrere Nebenstrecken angeordnet sein, die mit der Hauptstrecke beispielsweise über Weichen verbunden sind. Im Falle eines Langstator-Linearantriebs muss dieser sich nicht entlang der gesamten Führungsbahn erstrecken. Alternativ kann beispielsweise der Rückführabschnitt mit einem kontinuierlichen Antrieb, wie einem Transportriemen oder Ähnlichem, ausgestattet sein.

In einem Ausführungsbeispiel sind die Förderelemente dazu ausgebildet, jeweils mehrere Behälter beim Überführen rückseitig zu schieben und/oder vorderseitig abzustützen.

In einem weiteren Ausführungsbeispiel sind die Förderelemente zur Behälterverzögerung in einer Einlaufförderrichtung der Einlauffördereinrichtung parallel zu dem Behältereinlaufstrom ein- und ausfahrbar, vorzugweise zumindest teilweise mittels einer Kulissenführung (z. B. Ausfahren) und/oder mittels einer Antriebseinheit (z. B. zum Einfahren und Verzögern des Behälters während des Einfahrens bzw. Einlaufens). Die mehreren Behälter können somit im sich bewegenden Behältereinlaufstrom von dem Förderelement, das mit einer Geschwindigkeit eingefahren wird, die an eine Fördergeschwindigkeit des Behältereinlaufstroms angepasst ist, vorzugsweise dieser entspricht, kontaktiert werden. Beim Überführen wird das Förderelement dann weiter eingefahren und dabei verzögert, um die Geschwindigkeitskomponente parallel zum Behältereinlaufstrom zu verringern, z. B. auf null oder annähernd null.

In einem weiteren Ausführungsbeispiel sind die Förderelemente als Einteilerbalken, vorzugsweise mit mehreren, in einem vorbestimmten oder verstellbaren Abstand zueinander angeordneten Vorsprüngen, ausgebildet. Zwischen den Vorsprüngen können die Behälter während des Überführens sicher gehalten und auch seitlich abgestützt werden. Eine Verstellbarkeit der Vorsprünge zueinander kann einen Formatwechsel z. B. auf größere oder kleinere Behälter ermöglichen. Sofern die Außenmaße der Behälter sich beim Formatwechsel nicht wesentlich verändern, ist es auch möglich, dass der Abstand zwischen der Vorsprüngen bzw. Fortsätzen nicht verändert werden muss.

In einer Ausführungsform weist die Vorrichtung ferner eine Steuereinheit auf, die zum Betreiben (z. B. Steuern und/oder Regeln) der Einlauffördereinrichtung, der Transferfördereinrichtung, der Auslauffördereinrichtung, der mehreren Bewegungsvorrichtungen und/oder des Langstator-Linearmotors eingerichtet ist.

Vorzugsweise kann sich der Begriff "Steuereinheit" auf eine Elektronik beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

In einer Weiterbildung ist die Steuereinheit dazu eingerichtet, die mehreren Bewegungsvorrichtungen so entlang der Führungsbahn zu bewegen, dass die mehreren Bewegungsvorrichtungen (z. B. jeweils oder zumindest teilweise) unmittelbar vor dem (z. B. vorderseitigen oder rückseitigen) Kontaktieren der mehreren Behälter mittels des Förderelements verzögert (/abgebremst) werden, vorzugsweise zum Verringern eines Stoßes beim Kontaktieren der mehreren Behälter und/oder zum zumindest annähernd stoßfreien Kontaktieren der mehreren Behälter. Damit kann ein Behälterkipprisiko beim Überführen verringert werden und eine schonende und prozesssichere Behälterübernahme sicherstellt werden.

In einer weiteren Ausführungsform werden die mehreren Bewegungsvorrichtungen beim Überführen der mehreren Behälter (z. B. jeweils oder zumindest teilweise) beschleunigt (d. h., deren Geschwindigkeit wird erhöht), vorzugsweise auf eine Fördergeschwindigkeit der Auslauffördereinrichtung. Damit kann ein Behälterdurchsatz erhöht werden.

In einer Ausführungsvariante ist die Steuereinheit dazu eingerichtet, die mehreren Bewegungsvorrichtungen so entlang der Führungsbahn zu bewegen, dass die Förderelemente von zwei, vorzugsweise aufeinanderfolgenden, Bewegungsvorrichtungen der mehreren Bewegungsvorrichtungen die mehreren Behälter beim Überführen rückseitig schieben und vorderseitig abstützen. So kann ein Behälterkipprisiko beim Überführen verringert werden und/oder eine höhere Überführungsgeschwindigkeit zum Erhöhen des Behälterdurchsatzes ermöglicht werden.

In einer weiteren Ausführungsvariante ist die Steuereinheit dazu eingerichtet, die mehreren Bewegungsvorrichtungen so entlang der Führungsbahn zu bewegen, dass die Förderelemente von zwei, vorzugsweise aufeinanderfolgenden, Bewegungsvorrichtungen der mehreren Bewegungsvorrichtungen die mehreren Behälter beim Überführen zwischen sich einklemmen. So kann ebenfalls ein Behälterkipprisiko beim Überführen verringert werden und/oder eine höhere Überführungsgeschwindigkeit zum Erhöhen des Behälterdurchsatzes ermöglicht werden.

In einem Ausführungsbeispiel ist die Steuereinheit dazu eingerichtet ist, die mehreren Bewegungsvorrichtungen so entlang der Führungsbahn zu bewegen, dass eine vorlaufende Bewegungsvorrichtung der mehreren Bewegungsvorrichtungen nach dem Überführen der mehreren Behälter mittels rückseitigem Schieben durch das Förderelement der vorlaufenden Bewegungsvorrichtung entlang der Führungsbahn zurückbewegt wird, bis das Förderelement der vorlaufenden Bewegungsvorrichtung mehrere nachfolgende Behälter vorderseitig kontaktiert. Beim Überführen der mehreren, nachfolgenden Behälter stützt das Förderelement der vorlaufenden Bewegungsvorrichtung die mehreren nachfolgenden Behälter vorderseitig ab, und das Förderelement einer nachlaufenden Bewegungsvorrichtung der mehreren Bewegungsvorrichtungen schiebt die mehreren nachfolgenden Behälter rückseitig. Jede Bewegungsvorrichtung kann somit an zwei aufeinanderfolgenden Überführungen beteiligt sein. Zunächst wird deren Förderelement zum rückseitigen Schieben u. a. in einer Richtung parallel zum Behälterauslaufstrom verwendet. Dann wird die Bewegungsvorrichtung entgegen dem Behälterauslaufstrom zurückbewegt, um beim nächsten Überführungsvorgang die nächsten, mehreren Behälter vorderseitig abzustützen. Die gleichzeitige vorderseitige Abstützung und das rückseitige Schieben können, wie bereits erwähnt, ein Behälterkipprisiko beim Überführen verringern und/oder eine höhere Überführungsgeschwindigkeit zum Erhöhen des Behälterdurchsatzes ermöglichen.

In einem weiteren Ausführungsbeispiel ist die Steuereinheit dazu eingerichtet, die mehreren Bewegungsvorrichtungen so entlang der Führungsbahn zu bewegen, dass mindestens zwei (z. B. zwei, drei, vier usw.) aufeinanderfolgende Bewegungsvorrichtungen der mehreren Bewegungsvorrichtungen so relativ zueinander entlang der Führungsbahn bewegt werden, dass die Förderelemente der mindestens zwei (z. B. zwei, drei, vier usw.) Bewegungsvorrichtungen mehrere Behälterreihen im mehrspurigen Behälterauslaufstrom gruppieren (/zusammenfassen). Damit kann die Transferfördereinrichtung bereits eine Gruppierfunktionalität aufweisen, wodurch eine bezüglich des Behälterauslaufstroms stromabwärts angeordnete Gruppiervorrichtung kompakter gestaltet oder ggf. ganz weggelassen werden kann.

Zweckmäßig kann die Gruppierung in einem voreingestellten Muster erfolgen und/oder durch ein Verändern, besonders bevorzugt ein Verringern, eines Relativabstands zwischen den mindestens zwei Bewegungsvorrichtungen und deren Förderelemente erfolgen.

In einer Ausführungsform ist die Steuereinheit dazu eingerichtet, die mehreren Bewegungsvorrichtungen so entlang der Führungsbahn zu bewegen, dass eine Teilung (/ein Relativabstand) und/oder eine Geschwindigkeit der mehreren Bewegungsvorrichtungen in einem Rückführabschnitt der Führungsbahn, in dem die mehreren Bewegungsvorrichtungen zum erneuten Überführen mehrerer Behälter rückgeführt werden, erhöht wird. Dadurch kann eine Anzahl der zur Überführung notwendigen Bewegungsvorrichtungen verringert werden.

In einer weiteren Ausführungsform weist die Vorrichtung eine Gruppiervorrichtung auf, die stromabwärts der Transferfördereinrichtung angeordnet ist und mehrere, vorzugsweise ketten-, riemen- oder linearmotorgetriebene, Schubbalken zum Gruppieren der mehreren Behälter auf der Auslauffördereinrichtung aufweist. Die Gruppiervorrichtung kann eine Endgruppierung der Behälter im Behälterauslaufstrom vornehmen.

In einer weiteren Ausführungsform weist die Einlauffördereinrichtung mindestens eine Einteilvorrichtung zum Vorgeben einer voreingestellten (z. B. vorbestimmten oder einstellbaren) Teilung der Behälter des Behältereinlaufstroms auf. Vorzugsweise kann die mindestens eine Einteilvorrichtung als eine Einteilschnecke ausgeführt sein oder mehrere vorzugsweise mittels Langstator-Linearmotorsystem individuell antreibbare (bewegbare) Einteilelemente aufweisen. Somit können die Behälter im Behältereinlaufstrom auf eine gewünschte Teilung gebracht werden. Die Verwendung einer Einteilschnecke kann einfach umgesetzt werden. Die Verwendung von individuell antreibbaren Einteilelementen kann eine flexible Einstellung der Teilung ermöglichen, z. B. bei Formatumstellungen (z. B. zwischen Behältern mit unterschiedlichen Volumina (z. B. 0,5 I, 1 I, 1,5 I usw.) und/oder unterschiedlichen Formen (z. B. runder Querschnitt, rechteckiger Querschnitt usw.)).

In einem Ausführungsbeispiel ist die Einlauffördereinrichtung einspurig ausgeführt. Alternativ kann die Einlauffördereinrichtung mehrspurig (z. B. zweispurig) ausgeführt sein (z. B. mit mehreren parallelen Spuren, vorzugsweise ausgeführt als mehrere parallele Förderbänder). Vorzugsweise ist der einspurige Behältereinlaufstrom wechselbar über die mehrspurige Einlauffördereinrichtung. So kann beispielsweise eine jeweils gewünschte Spur der Einlauffördereinrichtung für den Behältereinlaufstrom zu der Transferfördereinrichtung gewählt werden. Die nicht gewählten Spuren fördern nicht bis zur Transferfördereinrichtung. Dies ermöglicht beispielsweise fliegende Formatumstellungen. Es wird explizit darauf hingewiesen, dass die mehrspurige Einlauffördereinrichtung hierin unabhängig von einem Vorhandensein und/oder einer Konfiguration der Auslauffördereinrichtung und/oder der Transferfördereinrichtung offenbart ist.

Zweckmäßig kann jeder der mehreren Spuren der Einlauffördereinrichtung eine eigene Einteilvorrichtung zugeordnet sein.

In einem weiteren Ausführungsbeispiel weist die Vorrichtung einen ersten Zulaufförderer, vorzugsweise mit einem Behälterpuffer und/oder einem Abschnitt mit einem sich in einer Behälterströmungsrichtung verjüngenden Strömungsquerschnitt, auf, wobei der erste Zulaufförderer bevorzugt stromaufwärts der Einlauffördereinrichtung angeordnet und vorzugsweise an eine erste Spur der Einlauffördereinrichtung angeschlossen ist. In einer Weiterbildung kann die Vorrichtung einen zweiten Zulaufförderer, vorzugsweise mit einem Behälterpuffer und/oder einem Abschnitt mit einem sich in einer Behälterströmungsrichtung verjüngenden Strömungsquerschnitt, aufweisen, wobei der zweite Zulaufförderer bevorzugt stromaufwärts der Einlauffördereinrichtung angeordnet und vorzugsweise an eine zweite Spur der Einlauffördereinrichtung angeschlossen ist. Vorteilhaft kann so eine hohe Flexibilität und ein schnelles Umstellen von einer Behältersorte auf eine andere Behältersorte erreicht werden.

In einer Weiterbildung weist die Vorrichtung eine Behälterbehandlungsvorrichtung auf, die stromaufwärts von dem ersten Zulaufförderer und stromaufwärts von dem zweiten Zulaufförderer angeordnet ist und einen (z. B. zweikanaligen) Auslauf zum wahlweisen Ausgeben von Behältern an den ersten Zulaufförderer oder an den zweiten Zulaufförderer aufweist.

Alternativ kann die Vorrichtung bspw. eine erste Behälterbehandlungsvorrichtung, die stromaufwärts von dem ersten Zulaufförderer angeordnet ist und einen Auslauf zum Ausgeben von Behältern an den ersten Zulaufförderer aufweist, und eine zweite Behälterbehandlungsvorrichtung, die stromaufwärts von dem zweiten Zulaufförderer angeordnet ist und einen Auslauf zum Ausgeben von Behältern an den zweiten Zulaufförderer aufweist, aufweisen.

Es ist möglich, dass die (erste) Behälterbehandlungsvorrichtung und/oder die zweite Behälterbehandlungsvorrichtung dazu ausgebildet ist, Behälter herzustellen, zu reinigen, zu prüfen, abzufüllen, zu verschließen, zu etikettieren und/oder zu bedrucken.

Die Erfindung betrifft auch ein Verfahren zum Verteilen und/oder Gruppieren von Behältern in einer Behälterbehandlungsanlage (z. B. zum Herstellen, Reinigen, Prüfen, Abfüllen, Verschlie-ßen, Etikettieren, Bedrucken und/oder Verpacken von Behältern für flüssige Medien, vorzugsweise Getränke oder flüssige Nahrungsmittel), vorzugsweise zum Betreiben einer Vorrichtung zum Verteilen und/oder Gruppieren von Behältern wie hierin offenbart. Das Verfahren weist ein Überführen jeweils mehrerer Behälter eines einspurigen Behältereinlaufstroms zu einem mehrspurigen Behälterauslaufstrom mittels einer Transferfördereinrichtung auf. Die Transferfördereinrichtung weist eine (z. B. parallel zum Behälterauslaufstrom ausgerichtete und/oder umlaufende) Führungsbahn und mehrere, vorzugsweise mittels eines Langstator-Linearmotors, individuell (z. B. einzeln und voneinander unabhängig) antreibbare Bewegungsvorrichtungen auf. Die mehreren Bewegungsvorrichtungen sind entlang der Führungsbahn geführt. Die mehreren Bewegungsvorrichtungen weisen (z. B. jeweils oder zumindest teilweise) ein Förderelement auf, das dazu ausgebildet ist, jeweils mehrere Behälter von dem einspurigen Behältereinlaufstrom zu dem mehrspurigen Behälterauslaufstrom zu überführen (vorzugsweise während sich die mehreren Bewegungsvorrichtungen entlang der Führungsbahn bewegen). Mit dem Verfahren können die gleichen Vorteile wie mit der hierin offenbarten Vorrichtung zum Verteilen und/oder Gruppieren von Behältern erzielt werden.

Zweckmäßig kann das Verfahren ferner ein einspuriges Zufördern einer Vielzahl von Behältern in dem Behältereinlaufstrom und/oder ein mehrspuriges Abfördern der Behälter in dem mehrspurigen Behälterauslaufstrom aufweisen.

In einem Ausführungsbeispiel weist das Überführen ein Verzögern (/Abbremsen) der jeweiligen Bewegungsvorrichtung beim Bewegen entlang der Führungsbahn unmittelbar vor dem (z. B. vorderseitigen oder rückseitigen) Kontaktieren der jeweils mehreren Behälter mittels des Förderelements auf, vorzugsweise zum Verringern eines Stoßes beim Kontaktieren der jeweils mehreren Behälter und/oder zum zumindest annähernd stoßfreien Kontaktieren der jeweils mehreren Behälter. Damit kann ein Behälterkipprisiko beim Überführen verringert werden.

In einem weiteren Ausführungsbeispiel weist das Überführen ein Beschleunigen (/Erhöhen einer Geschwindigkeit) der jeweiligen Bewegungsvorrichtung beim Bewegen entlang der Führungsbahn während des Überführens der jeweils mehreren Behälter, vorzugsweise auf eine Fördergeschwindigkeit des Behälterauslaufstroms, auf. Damit kann ein Behälterdurchsatz erhöht werden.

In einer Ausführungsform weist das Überführen ein rückseitiges Schieben und ein vorderseitiges Abstützen der mehreren Behälter beim Überführen durch die Förderelemente von zwei, vorzugsweise aufeinanderfolgenden, Bewegungsvorrichtungen der mehreren Bewegungsvorrichtungen, die sich entlang der Führungsbahn bewegen, auf. So kann ein Behälterkipprisiko beim Überführen verringert werden und/oder eine höhere Überführungsgeschwindigkeit zum Erhöhen des Behälterdurchsatzes ermöglicht werden.

In einer weiteren Ausführungsform weist das Überführen ein Einklemmen der mehreren Behälter beim Überführen durch die Förderelemente von zwei, vorzugsweise aufeinanderfolgenden, Bewegungsvorrichtungen der mehreren Bewegungsvorrichtungen, die sich entlang der Führungsbahn bewegen, auf. So kann ebenfalls ein Behälterkipprisiko beim Überführen verringert werden und/oder eine höhere Überführungsgeschwindigkeit zum Erhöhen des Behälterdurchsatzes ermöglicht werden.

In einer Ausführungsvariante weist das Überführen ein Rückbewegen einer vorlaufenden Bewegungsvorrichtung der mehreren Bewegungsvorrichtungen entlang der Führungsbahn, bis das Förderelement der vorlaufenden Bewegungsvorrichtung mehrere nachfolgende Behälter vorderseitig kontaktiert, nachdem das Förderelement der vorlaufenden Bewegungsvorrichtung die mehreren Behälter durch rückseitiges Schieben überführt hat, auf. Das Überführen weist ferner ein vorderseitiges Abstützen der mehreren nachfolgenden Behälter durch das Förderelement der vorlaufenden Bewegungsvorrichtung beim Bewegen entlang der Führungsbahn auf, während das Förderelement einer nachlaufenden Bewegungsvorrichtung der mehreren Bewegungsvorrichtungen beim Bewegen entlang der Führungsbahn die mehreren nachfolgenden Behälter rückseitig schiebt. Wie bereits erwähnt, kann somit jede Bewegungsvorrichtung an zwei aufeinanderfolgenden Überführungen beteiligt sein und dadurch ein Behälterkipprisiko beim Überführen verringert und/oder eine höhere Überführungsgeschwindigkeit zum Erhöhen des Behälterdurchsatzes ermöglicht werden.

In einer weiteren Ausführungsvariante weist das Überführen ein Ausfahren des Förderelements der jeweiligen Bewegungsvorrichtung entgegen dem Behältereinlaufstrom vor dem Kontaktieren der jeweils mehreren Behälter, vorzugsweise mittels einer Kulissenführung und/oder einer Antriebseinheit, auf. Das Verfahren kann ferner eine Behälterverzögerung in einer Einlaufförderrichtung mittels Einfahrens und Abbremsens des Förderelements der jeweiligen Bewegungsvorrichtung entgegengesetzt zu dem Ausfahren bei einem rückseitigen Schieben der jeweils mehreren Behälter beim Bewegen der jeweiligen Bewegungsvorrichtung entlang der Führungsbahn, vorzugsweise mittels einer Kulissenführung und/oder einer Antriebseinheit, aufweisen. Die mehreren Behälter können somit im sich bewegenden Behältereinlaufstrom von dem Förderelement, das mit einer Geschwindigkeit eingefahren wird, die an eine Fördergeschwindigkeit des Behältereinlaufstroms angepasst ist, vorzugsweise dieser entspricht, kontaktiert werden. Beim Überführen wird das Förderelement dann weiter eingefahren und dabei verzögert, um die Geschwindigkeitskomponente parallel zum Behältereinlaufstrom zu verringern, z. B. auf null oder annähernd null.

In einem Ausführungsbeispiel weist das Verfahren ferner ein Gruppieren von mehreren Behältern im mehrspurigen Behälterauslaufstrom durch die Förderelemente von mindestens zwei (z. B. zwei, drei, vier usw.), vorzugsweise aufeinanderfolgenden, Bewegungsvorrichtungen durch Bewegen der mindestens zwei Bewegungsvorrichtungen relativ zueinander entlang der Führungsbahn auf. Wie bereits erwähnt, kann somit bereits durch die Transferfördereinrichtung eine Gruppierfunktionalität bereitgestellt werden, wodurch eine bezüglich des Behälterauslaufstroms stromabwärts angeordnete Gruppiervorrichtung kompakter gestaltet oder ggf. ganz weggelassen werden kann.

In einem weiteren Ausführungsbeispiel weist das Verfahren ein Vergrößern einer Teilung (/eines Relativabstands) und/oder ein Erhöhen einer Geschwindigkeit der jeweiligen Bewegungsvorrichtungen in einem Rückführabschnitt der Führungsbahn zum Rückführen der mehreren Bewegungsvorrichtungen zum erneuten Überführen jeweils mehrerer Behälter auf. Wie bereits erwähnt, kann so eine erforderliche Anzahl an Bewegungsvorrichtungen verringert werden.

In einer Ausführungsform weist das Verfahren ferner ein Wechseln einer Spur des einspurigen Behältereinlaufstroms z. B. auf einer mehrspurigen Einlauffördereinrichtung auf. Dies kann beispielsweise im laufenden Betrieb zum Ermöglichen eines fliegenden Formatwechsels durchgeführt werden.

In einer weiteren Ausführungsform weist das Verfahren ein Verändern einer Teilung des einspurigen Behältereinlaufstroms mittels (z. B geführter und) individuell antreibbarer Einteilelemente einer Einteilvorrichtung auf. Zweckmäßig können die Einteilelemente mittels eines Langstator-Linearmotorsystems individuell antreibbar sein. Alternativ kann beispielsweise eine z. B. mittels Einteilschnecke vorbestimmte Teilung des einspurigen Behältereinlaufstroms vorgenommen werden.

In einer weiteren Ausführungsform weist das Verfahren ferner ein Verändern eines Abstands zwischen Vorsprüngen der Förderelemente (z. B. ausgeführt als Einteilbalken) bei einem Formatwechsel (z. B. zwischen Behältern mit unterschiedlichen Außenmaßen) auf.

In einer weiteren Ausführungsform weist das Verfahren ferner ein unterbrechungsfreies Wechseln einer Behälterzuführung zu der Transferfördereinrichtung von einem ersten Zulaufförderer zu einem zweiten Zulaufförderer, vorzugsweise zum Behältersortenwechsel, auf. Optional kann das Verfahren ferner ein Umrüsten des ersten Zulaufförderers auf eine neue Behältersorte, während der zweite Zulaufförderer Behälter zu der Transferfördereinrichtung zuführt, aufweisen und/oder ein Umrüsten des zweiten Zulaufförderers auf eine neue Behältersorte, während der erste Zulaufförderer Behälter zu der Transferfördereinrichtung zuführt, aufweisen.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Ansicht einer Vorrichtung zum Verteilen und/oder Gruppieren von Behältern gemäß einem Ausführungsbeispiel der vorliegenden Offenbarung;
- Figur 2: eine schematische Seitenansicht eines Ausschnitts aus der beispielhaften Vorrichtung;
- Figur 3: eine schematische Seitenansicht der Ausschnitts aus der beispielhaften Vorrichtung zu einem späteren Zeitpunkt;
- Figur 4: eine Draufsicht einer beispielhaften Vorrichtung zum Verteilen und/oder Gruppieren von Behältern gemäß einem Ausführungsbeispiel der vorliegenden Offenbarung;
- Figuren 5A-5C: Draufsichten einer beispielhaften Vorrichtung zum Verteilen und/oder Gruppieren von Behältern gemäß einem weiteren Ausführungsbeispiel der vorliegenden Offenbarung; und
- Figur 6: eine Draufsicht einer beispielhaften Vorrichtung zum Verteilen und/oder Gruppieren von Behältern gemäß einem weiteren anderen Ausführungsbeispiel der vorliegenden Offenbarung.

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

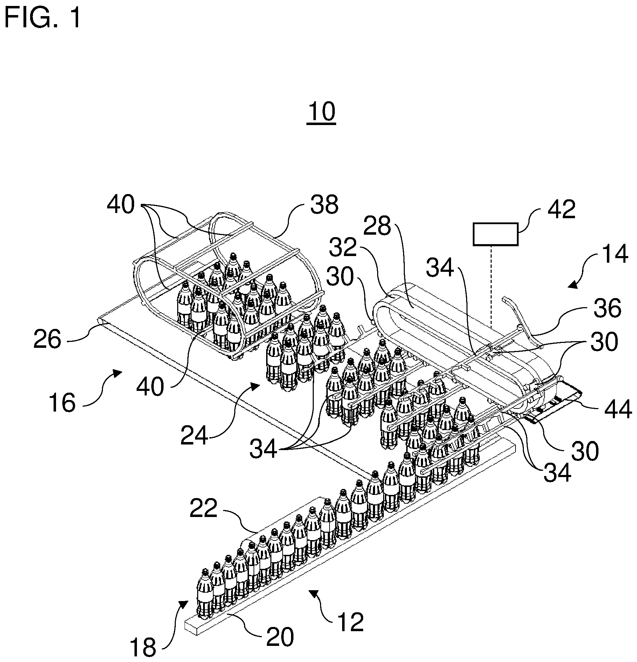

Figur 1 zeigt eine Vorrichtung 10 zum Verteilen und/oder Gruppieren von Behältern in einer Behälterbehandlungsanlage. Die Behälterbehandlungsanlage kann beispielsweise zum Herstellen, Reinigen, Prüfen, Füllen, Verschließen, Etikettieren, Bedrucken und/oder Verpacken von Behältern für flüssige Medien, z. B. Getränke oder flüssige Nahrungsmittel, ausgebildet sein.

Die Vorrichtung 10 weist eine einspurige Einlauffördereinrichtung 12, eine Transferfördereinrichtung 14 und eine mehrspurige Auslauffördereinrichtung 16 auf.

Auf der Einlauffördereinrichtung 12 werden eine Vielzahl von Behältern (zum Beispiel Flaschen, Dosen, Getränkekartons usw.) in einem einspurigen Behältereinlaufstrom 18 gefördert. Der Behältereinlaufstrom 18 wird zu der Transferfördereinrichtung 14 gefördert. Die Einlauffördereinrichtung 12 kann zum Fördern der Behälter beispielsweise ein umlaufendes Förderband 20 aufweisen. Die Behälter des Behältereinlaufstroms 18 können auf dem Förderband 20 stehen.

Die Einlauffördereinrichtung 12 kann eine Einteilvorrichtung 22 aufweisen. Der Behältereinlaufstrom 18 kann an der Einteilvorrichtung 22 aufgestaut werden. Die Einteilvorrichtung 22 kann die Behälter des Behältereinlaufstromes 18 auf eine vorbestimmte Teilung / einen vorbestimmten Abstand zueinander bringen. Die vorbestimmte Teilung des Behältereinlaufstroms 18 wird auf der Einlauffördereinrichtung 12 stromabwärts der Einteilvorrichtung 22 gehalten. Die vorbestimmte Teilung kann beispielsweise durch eine Konfiguration oder Geometrie der Einteilvorrichtung 22 vorgegeben sein. Beispielsweise kann die Einteilvorrichtung 22 als eine Einteilschnecke ausgeführt sein. Die Einteilschnecke kann einen drehbaren Körper mit schnecken- oder wendelförmigem Außenmantel aufweisen. Eine Teilung der Schneckengänge oder der Wendel kann der gewünschten vorbestimmten Teilung der Behälter des Behältereinlaufstroms 18 entsprechen.

Es ist auch möglich, dass die Einteilvorrichtung 22 anders ausgeführt ist. Z. B. kann die Einteilvorrichtung auch individuell antreibbare Einteilelemente aufweisen, die beispielsweise mittels eines Langstator-Linearmotorsystems angetrieben werden. Somit kann beispielsweise mittels der bewegbaren Einteilelemente (Mover bzw. Laufwägen) eine beliebige Teilung eingestellt werden. Die bewegbaren Einteilelemente können beispielsweise ein zweckmäßig bewegliches Paddel umfassen, um die Behälter auf jegliche beliebige Teilung voneinander zu beabstanden. Somit ist auch ein Einteilen von Formflaschen möglich. Diese Variante ist zeichnerisch nicht dargestellt. Die bewegbaren Einteilelemente können an einer vorzugsweise umlaufenden bzw. geschlossenen Führungsbahn geführt sein (ähnlich der Bewegungsvorrichtungen 30).

Auf der Auslauffördereinrichtung 16 wird eine Vielzahl von Behältern in einem mehrspurigen Behälterauslaufstrom 24 gefördert. Der Behälterauslaufstrom 24 wird durch die Transferfördereinrichtung 14 gebildet. Die Auslauffördereinrichtung 16 kann zum Fördern der Behälter beispielsweise ein umlaufendes Förderband 26 aufweisen. Die Behälter des Behälterauslaufstroms 24 können auf dem Förderband 26 stehen.

Die Transferfördereinrichtung 14 überführt jeweils mehrere Behälter des Behältereinlaufstroms 18 von der Einlauffördereinrichtung 12 zum Behälterauslaufstrom 24 auf der Auslauffördereinrichtung 16.

Die Transferfördereinrichtung 14 weist eine Führungsbahn 28 und mehrere Bewegungsvorrichtungen 30 auf.

Die Führungsbahn 28 ist als eine geschlossene, umlaufende Führungsbahn ausgeführt. Die Führungsbahn 28 ist parallel zur Auslauffördereinrichtung 16 ausgerichtet. Die Bewegungsvorrichtungen 30 sind an der Führungsbahn 28 geführt. Beispielsweise können die Bewegungsvorrichtungen 30 jeweils mittels eines oder mehrerer Führungselemente an der Führungsbahn 28 geführt sein. Die Führungselemente können zum Beispiel als drehbare Rollen oder Gleitschuhe ausgeführt sein. Die Führungsbahn kann beispielsweise eine oder mehrere parallel verlaufende Führungsschienen, Führungsnuten und/oder Fahrbahnen aufweisen.

Die Bewegungsvorrichtungen 30 sind individuell antreibbar. Die Bewegungsvorrichtungen 30 können somit einzeln und unabhängig voneinander bewegt werden. Da die Bewegungsvorrichtungen 30 alle an der Führungsbahn 28 geführt sind, sind deren Bewegungen aufeinander abzustimmen.

Besonders bevorzugt kann die Transferfördereinrichtung 14 einen Langstator-Linearmotor 32 mit den Bewegungsvorrichtungen 30 aufweisen. Permanent- und/oder Elektromagneten der Langstatorsegmente des Langstator-Linearmotors 32 können zum individuellen Antreiben der Bewegungsvorrichtungen 30 in magnetische Wechselwirkung mit Permanent- und/oder Elektromagneten der Bewegungsvorrichtungen 30 treten. Es ist allerdings auch möglich, dass die Bewegungsvorrichtungen 30 mittels einer anderen Technik individuell antreibbar sind. Beispielsweise können die Bewegungsvorrichtungen 30 jeweils eine eigene, zum Beispiel elektrische, Antriebseinheit zum Antreiben der jeweiligen Führungselemente aufweisen.

Die Verwendung des Langstator-Linearmotors 32 kann gegenüber anderen individuellen Antrieben den Vorteil aufweisen, dass durch den getriebelosen, dezentralen und somit massenträgheitsärmeren Antrieb der Bewegungsvorrichtungen 30 diese z. B. bei Überlast wesentlich sensibler und dynamischer gestoppt werden können. Somit kann eine geringere mechanische Belastung der Bewegungsvorrichtungen 30 und der Führungsbahn 28 erreicht werden. Dies kann insbesondere bei der dargestellten Kragträgerbauweise der Transferfördereinrichtung 14 wichtig sein.

Die Bewegungsvorrichtungen 30 weisen jeweils ein Förderelement 34 auf. Das Förderelement 34 überführt jeweils mehrere Behälter des Behältereinlaufstroms 18 zu dem Behälterauslaufstrom 24. Das Förderelement 34 ist so angeordnet, dass es über die Einlauffördereinrichtung 12 und die Auslauffördereinrichtung 16 kragt. Das Förderelement 34 kann zum rückseitigen Schieben von jeweils mehreren Behältern und zum vorderseitigen Abstützen von jeweils mehreren Behältern eingesetzt werden. Beispielsweise kann das Förderelement 34 als ein Einteilbalken ausgeführt sein. Der Einteilbalken kann beispielsweise an dessen Vorderseite mehrere Fortsätze oder Vorsprünge zum sicheren Halten der Behälter während des Überführens aufweisen. Beispielsweise können die Vorsprünge beim Überführen zwischen benachbarten Behältern positioniert sein, um die Behälter sicher am Einteilbalken zu halten. Eine Rückseite des Einteilbalkens kann beispielsweise eine ebene Abstützfläche aufweisen.

Es ist möglich, dass die Förderelemente 34 jeweils individuell ein- und ausfahrbar sind. Die Förderelemente 34 können parallel zu dem Behältereinlaufstrom 18 / der Einlauffördereinrichtung 12 ein- und ausgefahren werden.

Beispielsweise können die Förderelemente 34 verschiebbar gelagert sein. Jeweils vor dem Kontaktieren mehrerer Behälter können die Förderelemente 34 durch eine (Ausfahr-)Kulissenführung 36 ausgefahren werden. Beispielsweise kann das Förderelement 34 ein Betätigungselement aufweisen, das zum Ausfahren des Förderelements 34 entlang der Kulissenführung 36 geführt wird, z. B. in einem Rückführabschnitt der Führungsbahn 28.

Die Förderelemente 34 können während des Überführens der mehreren Behälter von einer Antriebseinheit 44 wie gewünscht eingefahren werden. Beim Einfahren können die mehreren Behälter bezüglich der Vorschubrichtung der Einlauffördereinrichtung 12 verzögert werden. Die Antriebseinheit 44 kann, wie dargestellt ist, extern von den Bewegungsvorrichtungen 30 angeordnet sein. Die Antriebseinheit 44 kann beispielsweise in Form eines umlaufenden (Band-)Riemens, auf dem mindestens ein Kontaktelement zum Kontaktieren der Betätigungselemente der Förderelemente 34 angeordnet ist, ausgebildet sein. Es ist möglich, dass die Bewegungsvorrichtungen 30 jeweils eigene Antriebseinheiten, vorzugsweise Linear-Antriebseinheiten, zum Ein- und/oder Ausfahren der Förderelemente 34 aufweisen. Es ist auch möglich, die Förderelemente 34 mittels einer (Einfahr-)Kulissenführung während des Überführens der mehreren Behälter einzufahren.

Die Vorrichtung 10 kann ferner optional eine Gruppiervorrichtung 38 aufweisen. Die Gruppiervorrichtung 38 kann bezüglich des Behälterauslaufstroms 24 stromabwärts der Transferfördereinrichtung 14 angeordnet sein. Die Gruppiervorrichtung 38 weist zum Beispiel mehrere Schubbalken 40 zum (End-)Gruppieren des Behälterauslaufstroms 24 auf. Die Schubbalken 40 sind umlaufend geführt und angetrieben. Beispielsweise können die Schubbalken 40 mittels Ketten-, Riemen- oder Langstator-Linearmotor angetrieben sein. Die Schubbalken 40 können so bewegt werden, dass sie zum (End-)Gruppieren jeweils Behälterreihen aufstauen, zusammenschieben und/oder voneinander wegschieben. Beim (End-)Gruppieren kann eine exakte, vorbestimmte Gruppierung hinsichtlich Anzahl, Formation und Position der Behälter des Behälterauslaufstroms 24 vorgenommen werden. Dies kann beispielsweise erforderlich sein, um die gruppierten Behälter des Behälterauslaufstroms 24 in einer stromabwärts angeordneten Verpackungsmaschine (nicht dargestellt) automatisch zu verpacken.

Die Vorrichtung 10 weist ferner eine Steuereinheit 42 (nur schematisch in Figur 1 dargestellt) zum Steuern und/oder Regeln (Steuern mit Rückkopplung) der Transfervorrichtung 14 auf. Zweckmäßig kann die Steuereinheit 42 die individuelle Bewegung der Bewegungsvorrichtungen 30 und optional das individuelle Ein- und/oder Ausfahren der Förderelemente 34 steuern, wie nachfolgend anhand verschiedener Beispiele im Detail beschrieben ist. Die Steuereinheit 42 kann ferner dazu eingerichtet sein, die Einlauffördereinrichtung 12, die Auslauffördereinrichtung 16 und/oder die Gruppiervorrichtung 38 zu betreiben.

Durch die Möglichkeit des individuellen Antreibens der Bewegungsvorrichtungen 30 ergeben sich neue Freiheitsgrade zum verbesserten Überführen der mehreren Behälter durch die Transferfördereinrichtung 14, die beispielsweise einzeln oder in Kombination miteinander genutzt werden können.

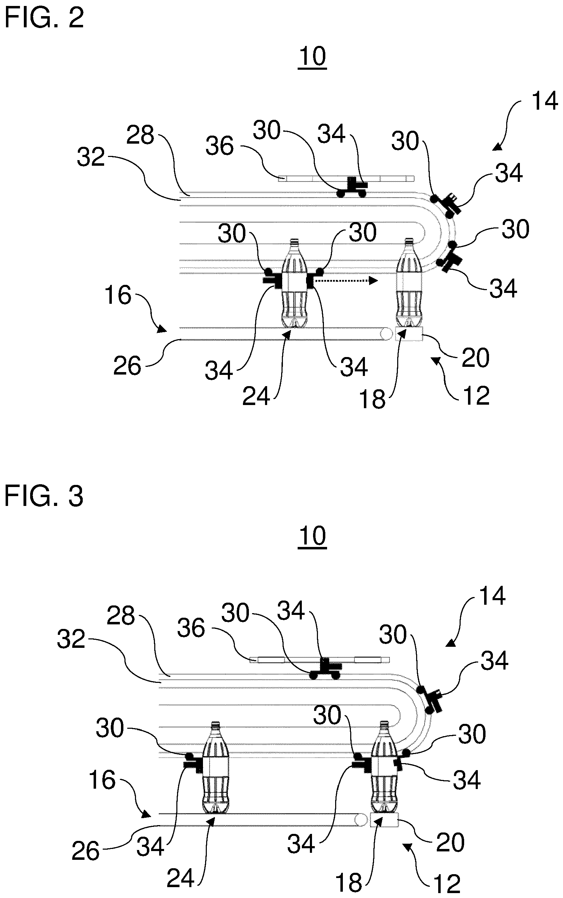

Die Figuren 2 und 3 stellen einen beispielhaften Bewegungsablauf der Bewegungsvorrichtungen 30 dar. Beispielsweise können die Bewegungsvorrichtungen 30 jeweils paarweise so bewegt werden, dass die Förderelemente 34 des Paares der Bewegungsvorrichtungen 30 beim Überführen die jeweils überführten Behälter zwischen sich (ein-)klemmen. Das Förderelement 34 der vorlaufenden Bewegungsvorrichtung 30 kann die Behälter vorderseitig abstützen. Das Förderelement 34 der nachlaufenden Bewegungsvorrichtung 30 kann die Behälter rückseitig schieben. Hierdurch kann insbesondere ein Kipprisiko von kippgefährdeten Behältern beim Überführen erheblich verringert werden. Gleichermaßen kann eine Geschwindigkeit beim Überführen durch das sichere Halten der Behälter erhöht werden.

Die Bewegungsvorrichtungen 30 können dabei beispielsweise wie folgt bewegt werden: Zunächst wird die Bewegungsvorrichtung 30 entlang der Führungsbahn 28 in einer Richtung des Behälterauslaufstroms 24 bewegt. Das jeweilige Förderelement 34 kommt rückseitig in Kontakt mit mehreren Behältern des Behältereinlaufstroms 18. Durch die Bewegung der jeweiligen Bewegungsvorrichtung 30 entlang der Führungsbahn 28 schiebt das jeweilige Förderelement 34 die mehreren Behälter auf die Auslauffördereinrichtung 16. Danach kann die jeweilige Bewegungsvorrichtung 30 zurückbewegt werden, d. h. entgegen der Richtung des Behälterauslaufstroms (siehe gestrichelten Pfeil in Figur 2). Die jeweilige Bewegungsvorrichtung 30 wird so lange zurückbewegt, bis deren Förderelemente 34 vorderseitig mehrere nachlaufende Behälter zum vorderseitigen Abstützen kontaktiert. Beim vorderseitigen Abstützen bewegt sich die jeweilige Bewegungsvorrichtung 30 wieder in der Richtung des Behälterauslaufstroms 24. Währenddessen werden die mehreren nachlaufenden Behälter durch das Förderelement 34 der nachlaufenden Bewegungsvorrichtung 30 von der Einlauffördereinrichtung 12 zu der Auslauffördereinrichtung 16 rückseitig geschoben.

Die individuelle Antreibbarkeit der Bewegungsvorrichtungen 30 kann auch dazu genutzt werden, die Bewegungsvorrichtungen 30 unmittelbar vor dem Kontaktieren der mehreren Behälter des Behältereinlaufstroms 18 zu verzögern/abzubremsen. Das jeweilige Förderelement 34 der Bewegungsvorrichtungen 30 trifft mit einer nur geringen Geschwindigkeit auf die mehreren Behälter auf. Dadurch kann ein ungewünschtes Stoßen der mehreren Behälter beim Kontaktieren durch das jeweilige Förderelement 34 verhindert und/oder zumindest wesentlich reduziert werden. Dadurch kann das Umfallrisiko der Behälter beim Kontaktieren verringert werden.

Es ist möglich, die Bewegungsvorrichtungen 30 zu beschleunigen, nachdem die jeweiligen Förderelemente 34 die jeweils mehreren Behälter des Behältereinlaufstroms 18 berührt haben. Die Bewegungsvorrichtungen 30 können derart beschleunigt werden, dass ein zum Erreichen der jeweils gewünschten Förderleistung gewünschtes höheres Geschwindigkeitsniveau erreicht wird. Das Geschwindigkeitsniveau kann an eine Vordergeschwindigkeit der Auslauffördereinrichtung 16 angepasst sein.

Es ist auch möglich, die Bewegungsvorrichtungen 30 nach dem Überführen der mehreren Behälter auf die Auslauffördereinrichtung 16 zum (Vor-)Gruppieren der Behälter des Behälterauslaufstroms 24 zu bewegen. Beispielsweise können Relativabstände zwischen aufeinanderfolgenden Reihen von Behältern des Behälterauslaufstroms 24 durch die Förderelemente 34 angepasst werden. Die Bewegungsvorrichtungen 30 der jeweiligen Förderelemente 34 können bei deren Bewegung entlang der Führungsbahn 28 dazu wie gewünscht individuell abgebremst, beschleunigt, vorbewegt und/oder rückbewegt werden. Die (Vor-)Gruppierung kann den Vorteil aufweisen, dass die Gruppiervorrichtung 38 weggelassen oder zumindest deutlich verkleinert, insbesondere verkürzt, werden kann.

Eine weitere Möglichkeit zur vorteilhaften Ausnutzung der individuellen Antreibbarkeit der Bewegungsvorrichtungen 30 besteht darin, dass die Bewegungsvorrichtungen 30 während des Bewegens entlang eines Rückführabschnitts der Führungsbahn 28 mit größerer Teilung und größerer Geschwindigkeit bewegt werden können. Im Rückführabschnitts der Führungsbahn 28 werden die Bewegungsvorrichtungen 30 zum erneuten Überführen mehrerer Behälter des Behältereinlaufstroms 18 rückgeführt. Dadurch kann eine Anzahl an Bewegungsvorrichtungen 30, die zum Betrieb der Transferfördereinrichtung 14 benötigt werden, deutlich verringert werden.

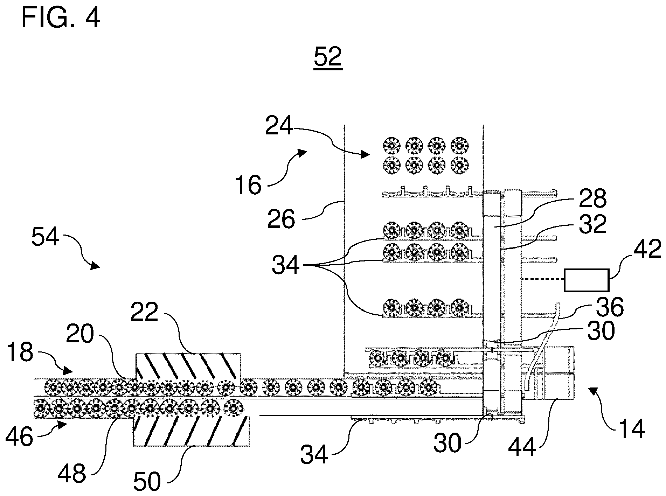

Die Figur 4 zeigt eine weitere Vorrichtung 52 zum Verteilen und/oder Gruppieren von Behältern in einer Behälterbehandlungsanlage ähnlich zu der Figur 1.

Die Vorrichtung 52 unterscheidet sich von der Vorrichtung 10 in der Einlaufsituation. Die Einlauffördereinrichtung 54 ist mehrspurig. Im Einzelnen kann die Einlauffördereinrichtung 54 beispielsweise zwei Behältereinlaufströme 18, 46 mit jeweils einer Vielzahl von Behältern aufweisen. Es ist auch möglich, mehr als zwei zweckmäßig parallele Spuren vorzusehen. Die Behältereinlaufströme 18, 46 werden zu der Transferfördereinrichtung 14 gefördert. Die Einlauffördereinrichtung 54 kann zum Fördern der Behälter beispielsweise zwei umlaufende Förderbänder 20, 48 aufweisen.

Die Einlauffördereinrichtung 54 kann zudem beispielsweise zwei Einteilvorrichtungen 22 und 50 aufweisen. Die erste Einteilvorrichtung 22 gibt eine Teilung für den ersten Behältereinlaufstrom vor. Die zweite Einteilvorrichtung gibt eine Teilung für den zweiten Behältereinlaufstrom vor. Die Einteilvorrichtungen 22,50 können unterschiedliche oder gleiche Teilungen vorgeben, je nach Konfiguration bzw. Einstellung. Die Einteilvorrichtungen 22, 50 können beispielsweise als Einteilschnecken oder als z. B. mittels Langstator-Linearmotorsystem individuell antreibbare Einteilelemente ausgeführt sein.

In der Vorrichtung 52 ist es mit der Einlauffördereinrichtung 54 möglich, eine Formatumstellung auf ein anderes Behälterformat durchzuführen, und zwar während des Betriebs bzw. der Produktion. Dazu wird im ersten Behältereinlaufstrom 18 auf dem Förderband 20 ein Behälterformat von der Vorrichtung 52 gemäß der Beschreibung der Vorrichtung 10 verarbeitet. Wird nun in der Behälterbehandlungsanlage das Format auf einen anderen Behälter umgestellt, kann die Anlage stromaufwärts der Vorrichtung 52 bereits auf das neue Behälterformat umgestellt werden. Während die Vorrichtung 52 noch das alte Behälterformat verarbeitet, kann dann das neue Behälterformat auf dem zweiten Behältereinlaufstrom 46 bereits anfahren (wie in Figur 2 dargestellt). Sobald der erste Behälterstrom 18 aufgebraucht ist, kann dann der zweite Behälterstrom 46 final zu der Transferfördereinrichtung 14 gefördert werden. Zweckmäßig wird stets nur einer der Behälterströme 18, 46 zu der Fördereinrichtung gefördert. Der andere wartet mit der endgültigen Zuführung zu der Transferfördereinrichtung 18 auf den gewünschten Zeitpunkt der Formatumstellung, der zugleich den Stopp des bisher geförderten Behältereinlaufstroms 18 oder 46 bewirkt. Somit ist hier ein "fliegender" Formatwechsel möglich.

Im Einzelnen können beispielsweise erforderliche manuelle Formatumstellarbeiten damit bereits während der Produktion und somit ohne Zeitverlust erfolgen. Die eigentliche Programmumstellung erfolgt steuerungstechnisch. Dabei stoppen das Förderband 20 und die Einteilvorrichtung 22, während gleichzeitig das Förderband 48 und die Einteilvorrichtung 50 anfahren. In Figur 4 ist das Förderband 20 im Betrieb dargestellt. Der Behältereinlaufstrom 18 wird der Transferfördereinrichtung 14 zugeführt. Währenddessen ist das Förderband 48 und somit der Behältereinlaufstrom 46 bereits für den fliegenden Formatwechsel vorbereitet.

Die Steuereinheit 42 kann beispielsweise eine veränderte Kontaktposition der Förderelemente 34 mit den Behältern auf dem Förderband 48 berücksichtigen. Beispielsweise kann die Steuereinheit ein Verfahrprofil der Förderelemente 34 so anpassen, dass die Behälter entsprechend dem jeweils aktiven Behältereinlaufstrom 18 oder 46 zum Förderband 20 schonend übergeschoben werden. Die Förderelemente 34 können die Behälter des ersten Behältereinlaufstroms 18 vom Förderband 20 direkt zu dem Förderband 26 der Auslauffördereinrichtung 16 verschieben. Die Förderelemente 34 können die Behälter des zweiten Behältereinlaufstroms 46 über das Förderband 20 zu dem Förderband 26 verschieben. Wie bereits erläutert, sind auch mehr als zwei parallel nebeneinander angeordnete Zulaufförderbänder denkbar.

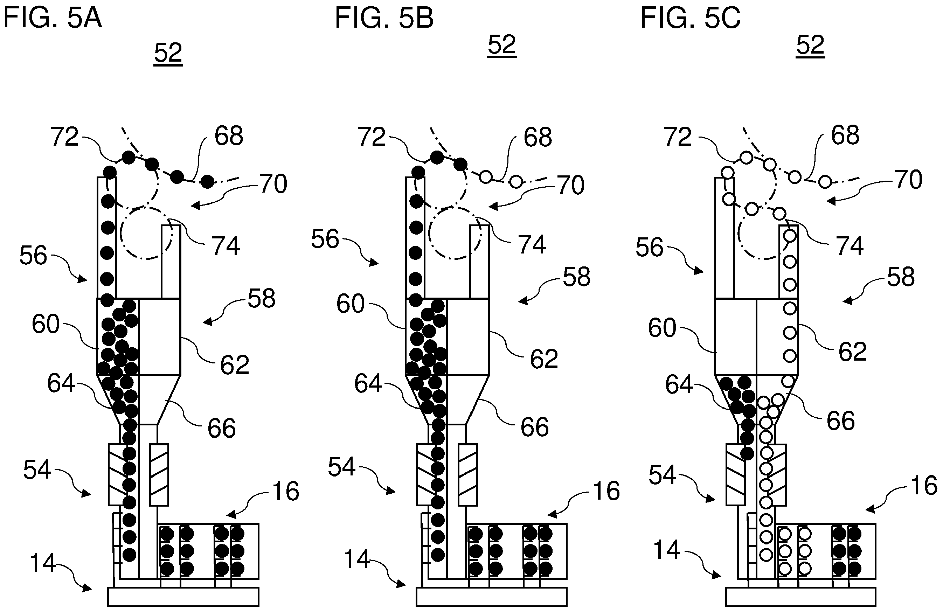

Die Figuren 5A bis 5C zeigen eine mögliche Erweiterung zu der Ausführungsform von Figur 4 in unterschiedlichen Betriebsphasen.

Die Vorrichtung 52 weist einen ersten Zulaufförderer 56 und einen zweiten Zulaufförderer 58 auf.

Der Zulaufförderer 56, 58 sind (behälter-) stromaufwärts von dem Einlauffördereinrichtung 54 angeordnet. Der erste Zulaufförderer 56 kann Behälter zu einer ersten Spur der Einlauffördereinrichtung 54 fördern. Der zweite Zulaufförderer 58 kann Behälter zu einer zweiten Spur der Einlauffördereinrichtung 54 fördern. Bevorzugt sind die Zulaufförderer 56, 58 parallel zueinander angeordnet. Die Zulaufförderer 56, 58 können bspw. umlaufende Förderbänder zum Transportieren von Behältern aufweisen.

Die Zulaufförderer 56, 58 weisen jeweils einen Behälterpuffer 60, 62 und einen sich verjüngenden Abschnitt 64, 66 auf.

Im Behälterpuffer 60, 62 können Behälter gepuffert werden, vorzugsweise ungeordnet.

Der Abschnitt 64 verbindet den Behälterpuffer 60 mit der ersten Spur der Einlauffördereinrichtung 54. Der Abschnitt 66 verbindet den Behälterpuffer 62 mit der zweiten Spur der Einlauffördereinrichtung 54. In den Abschnitten 64, 66 verjüngt sich jeweils ein Strömungsquerschnitt für die Behälter von einem mehrspurigen, vorzugsweise ungeordneten, Einlass zu einem einspurigen Auslass. Der Einlass des Abschnitts 64 ist mit dem Behälterpuffer 60 verbunden. Der Einlass des Abschnitts 66 ist mit dem Behälterpuffer 62 verbunden. Der Auslass des Abschnitts 64 ist mit der ersten Spur der Einlauffördereinrichtung 54 verbunden. Der Auslass des Abschnitts 66 ist mit dem der zweiten Spur der Einlauffördereinrichtung 54 verbunden.

Die Zulaufförderer 56, 58 können Behälter von der gleichen Behälterbehandlungsvorrichtung 68 empfangen, vorzugsweise über einen bevorzugt zweikanaligen Auslauf 70. Die Behälterbehandlungsvorrichtung 68 kann bspw. dazu ausgebildet ist, Behälter herzustellen, zu reinigen, zu prüfen, abzufüllen, zu verschließen, zu etikettieren und/oder zu bedrucken. Der Auslauf 70 kann bspw. zwei Auslaufsterne (z. B. Drehriegelsterne) aufweisen. Ein erster Auslaufstern 72 verbindet die Behälterbehandlungsvorrichtung 68 wahlweise mit dem ersten Zulaufförderer 56 oder einem zweiten Auslaufstern 74. Je nach Einstellung kann der erste Auslaufstern 72 Behälter von der Behälterbehandlungsvorrichtung 68 zu dem ersten Zulaufförderer 56 oder zu dem zweiten Auslaufstern 74 fördern. Der zweite Auslaufstern 74 verbindet den ersten Auslaufstern 72 mit dem zweiten Zulaufförderer 58.

Die Erweiterung mit dem Auslauf 70 und den beiden Zulaufförderern 56, 58 erlaubt einen fliegenden Produktwechsel, wie nachfolgend beschrieben ist.

Figur 5A zeigt, dass erste Behälter (mit schwarz gefüllte Kreise) von der Behälterbehandlungsvorrichtung 68 über den zweikanaligen Auslauf 70 und den ersten Zulaufförderer 56 zu der ersten Spur der Einlauffördereinrichtung 54 zum Verteilen und/oder Gruppieren mittels der Transferfördervorrichtung 14 zugeführt werden. Währenddessen könnte bereits der zweite Auslaufstern 74, der zweite Zulaufförderer 58 und/oder die zweite Spur der Einlauffördereinrichtung 54 für zweite Behälter umgerüstet werden. Vorzugsweise ist der zweite Auslaufstern 74, der zweite Zulaufförderer 58 und/oder die zweite Spur der Einlauffördereinrichtung 54 nicht im Betrieb.

Figur 5B zeigt eine Umstellung der Behälterbehandlungsvorrichtung 58, die in Kürze zweite Behälter (mit weiß gefüllte Kreise) ausgibt. Die zweiten Behälter können sich von den ersten Behältern bspw. in einer Form, Größe, Füllung oder Ausstattung (z. B. Etikettierung oder Bedruckung) unterscheiden. Es ist möglich, dass die Fortsätze oder Vorsprünge des bevorzugt als Einteilbalken ausgeführten Förderelements 34 verstellbar ausgeführt sind. Somit kann ein Abstand zwischen den Vorsprüngen verstellt werden, wenn sich z. B. bei einem Formatwechsel die Außenmaße des zweiten Behälters vom ersten Behälter erheblich geometrisch unterscheiden.

Figur 5C zeigt, dass nunmehr die zweiten Behälter von der Behälterbehandlungsvorrichtung 68 über den ersten Auslaufstern 72, den zweiten Auslaufstern 74 und den zweiten Zulaufförderer 58 zu der zweiten Spur der Einlauffördereinrichtung 54 zum Verteilen und/oder Gruppieren mittels der Transferfördervorrichtung 14 zugeführt werden. Währenddessen könnte bereits der erste Zulaufförderer 56 und/oder die erste Spur der Einlauffördereinrichtung 54 für wiederum andere Behälter umgerüstet werden. Vorzugsweise ist der erste Zulaufförderer 56 und/oder die erste Spur der Einlauffördereinrichtung 54 nicht im Betrieb.

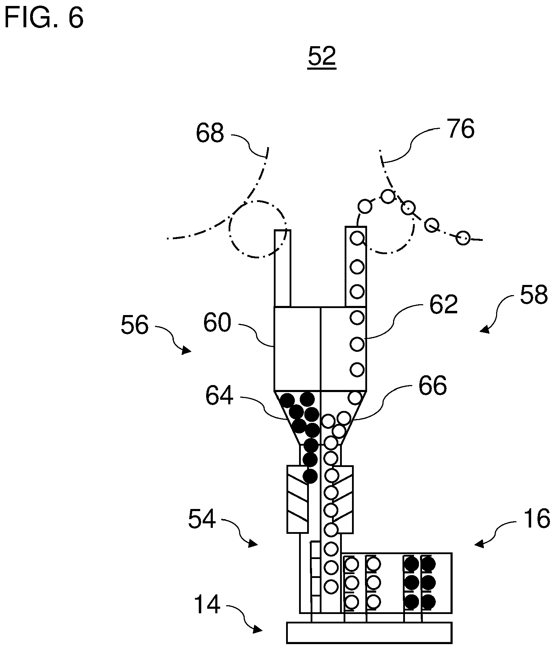

Figur 6 zeigt, dass alternativ zu der Anordnung der Figuren 5A bis 5C beispielsweise auch die Möglichkeit besteht, eine zweite Behälterbehandlungsvorrichtung 76 einzubeziehen. So kann ebenfalls ein fliegender Produktwechsel erfolgen. Entweder werden Behälter von der ersten Behälterbehandlungsvorrichtung 68 zu der Transferfördervorrichtung 14 gefördert. Alternativ werden Behälter von der zweiten Behälterbehandlungsvorrichtung 68 zu der Transferfördervorrichtung 14 gefördert.

Die erste Behälterbehandlungsvorrichtung 68 ist stromaufwärts des ersten Zulaufförderers 56 angeordnet. Ein Auslaufstern verbindet die erste Behälterbehandlungsvorrichtung 68 mit dem ersten Zulaufförderer 56. Die zweite Behälterbehandlungsvorrichtung 76 ist stromaufwärts des zweiten Zulaufförderers 58 angeordnet. Ein Auslaufstern verbindet die zweite Behälterbehandlungsvorrichtung 76 mit dem zweiten Zulaufförderer 58.

Die zweite Behälterbehandlungsvorrichtung 76 kann bspw. dazu ausgebildet sein, Behälter herzustellen, zu reinigen, zu prüfen, abzufüllen, zu verschließen, zu etikettieren und/oder zu bedrucken.

Die Erfindung wird ausschliesslich durch die Ansprüche bestimmt und ist nicht auf die vorstehend beschriebenen bevorzugten Ausführungsbeispiele beschränkt.

### Bezugszeichenliste

- 10: Vorrichtung zum Verteilen und/oder Gruppieren
- 12: Einlauffördereinrichtung
- 14: Transferfördereinrichtung
- 16: Auslauffördereinrichtung
- 18: Behältereinlaufstrom
- 20: Förderband
- 22: Einteilvorrichtung
- 24: Behälterauslaufstrom
- 26: Förderband
- 28: Führungsbahn
- 30: Bewegungsvorrichtung
- 32: Langstator-Linearmotor
- 34: Förderelement
- 36: Kulissenführung
- 38: Gruppiervorrichtung
- 40: Schubbalken
- 42: Steuereinheit
- 44: Antriebseinheit
- 46: Behältereinlaufstrom
- 48: Förderband
- 50: Einteilvorrichtung
- 52: Vorrichtung zum Verteilen und/oder Gruppieren
- 54: Einlauffördereinrichtung
- 56: Erster Zulaufförderer
- 58: Zweiter Zulaufförderer
- 60,62: Behälterpuffer
- 64,66: Sich verjüngender Abschnitt
- 68: (Erste) Behälterbehandlungsvorrichtung
- 70: Auslauf
- 72: Erster Auslaufstern
- 74: Zweiter Auslaufstern
- 76: Zweite Behälterbehandlungsvorrichtung

## Patentansprüche

1. Vorrichtung (10, 52) zum Verteilen und/oder Gruppieren von Behältern in einer Behälterbehandlungsanlage, aufweisend:
eine Einlauffördereinrichtung (12, 54), die dazu ausgebildet ist, eine Vielzahl von Behältern in einem einspurigen Behältereinlaufstrom (18, 46) zu fördern;
eine Auslauffördereinrichtung (16), die dazu ausgebildet ist, die Behälter in einem mehrspurigen Behälterauslaufstrom (24) quer, vorzugsweise 90°, zum Behältereinlaufstrom (18, 46) oder der Einlauffördereinrichtung (12, 54) abzufördern; und
eine Transferfördereinrichtung (14), die eine Führungsbahn (28) und mehrere, vorzugsweise mittels eines Langstator-Linearmotors (32), individuell antreibbare Bewegungsvorrichtungen (30), die entlang der Führungsbahn (28) geführt sind, aufweist, wobei die mehreren Bewegungsvorrichtungen (30) ein Förderelement (34) aufweisen, das dazu ausgebildet ist, jeweils mehrere Behälter von der Einlauffördereinrichtung (12, 54) zu der Auslauffördereinrichtung (16) zu überführen.

2. Vorrichtung (10, 52) nach Anspruch 1, wobei:
die Förderelemente (34) dazu ausgebildet sind, jeweils mehrere Behälter beim Überführen rückseitig zu schieben und/oder vorderseitig abzustützen; und/oder
die Förderelemente (34) zur Behälterverzögerung in einer Einlaufförderrichtung der Einlauffördereinrichtung (12, 54) parallel zu dem Behältereinlaufstrom (18, 46) ein- und ausfahrbar sind, vorzugweise zumindest teilweise mittels einer Kulissenführung (36) und/oder mittels einer Antriebseinheit (44); und/oder
die Förderelemente (34) als Einteilerbalken, vorzugsweise mit mehreren, in einem vorbestimmten oder verstellbaren Abstand zueinander angeordneten Vorsprüngen, ausgebildet sind.

3. Vorrichtung (10, 52) nach Anspruch 1 oder Anspruch 2, ferner aufweisend:
eine Steuereinheit (42), die zum Betreiben der Einlauffördereinrichtung (12, 54), der Transferfördereinrichtung (14), der Auslauffördereinrichtung (16), der mehreren Bewegungsvorrichtungen (30) und/oder des Langstator-Linearmotors (32) eingerichtet ist.

4. Vorrichtung (10, 52) nach Anspruch 3, wobei die Steuereinheit (42) dazu eingerichtet ist, die mehreren Bewegungsvorrichtungen (30) so entlang der Führungsbahn (28) zu bewegen, dass:
die mehreren Bewegungsvorrichtungen (30) unmittelbar vor dem Kontaktieren der mehreren Behälter mittels des Förderelements (34) verzögert werden, vorzugsweise zum Verringern eines Stoßes beim Kontaktieren der mehreren Behälter und/oder zum zumindest annähernd stoßfreien Kontaktieren der mehreren Behälter; und/oder
die mehreren Bewegungsvorrichtungen (30) beim Überführen der mehreren Behälter beschleunigt werden, vorzugsweise auf eine Fördergeschwindigkeit der Auslauffördereinrichtung (16).

5. Vorrichtung (10, 52) nach Anspruch 3 oder Anspruch 4, wobei die Steuereinheit (42) dazu eingerichtet ist, die mehreren Bewegungsvorrichtungen (30) so entlang der Führungsbahn (28) zu bewegen, dass:
die Förderelemente (34) von zwei, vorzugsweise aufeinanderfolgenden, Bewegungsvorrichtungen der mehreren Bewegungsvorrichtungen (30) die mehreren Behälter beim Überführen rückseitig schieben und vorderseitig abstützen; und/oder
die Förderelemente (34) von zwei, vorzugsweise aufeinanderfolgenden, Bewegungsvorrichtungen der mehreren Bewegungsvorrichtungen (30) die mehreren Behälter beim Überführen zwischen sich einklemmen.

6. Vorrichtung (10, 52) nach einem der Ansprüche 3 bis 5, wobei die Steuereinheit (42) dazu eingerichtet ist, die mehreren Bewegungsvorrichtungen (30) so entlang der Führungsbahn (28) zu bewegen, dass:
eine vorlaufende Bewegungsvorrichtung der mehreren Bewegungsvorrichtungen (30) nach dem Überführen der mehreren Behälter mittels rückseitigen Schiebens durch das Förderelement (34) der vorlaufenden Bewegungsvorrichtung entlang der Führungsbahn (28) zurückbewegt wird, bis das Förderelement (34) der vorlaufenden Bewegungsvorrichtung mehrere nachfolgende Behälter vorderseitig kontaktiert; und
beim Überführen der mehreren, nachfolgenden Behälter das Förderelement (34) der vorlaufenden Bewegungsvorrichtung die mehreren nachfolgenden Behälter vorderseitig abstützt und das Förderelement (34) einer nachlaufenden Bewegungsvorrichtung der mehreren Bewegungsvorrichtungen (30) die mehreren nachfolgenden Behälter rückseitig schiebt.

7. Vorrichtung (10, 52) nach einem der Ansprüche 3 bis 6, wobei die Steuereinheit (42) dazu eingerichtet ist, die mehreren Bewegungsvorrichtungen (30) so entlang der Führungsbahn (28) zu bewegen, dass:
mindestens zwei aufeinanderfolgende Bewegungsvorrichtungen der mehreren Bewegungsvorrichtungen (30) so relativ zueinander entlang der Führungsbahn (28) bewegt werden, dass die Förderelemente (34) der mindestens zwei Bewegungsvorrichtungen mehrere Behälterreihen im mehrspurigen Behälterauslaufstrom (24) gruppieren; und/oder
eine Teilung und/oder eine Geschwindigkeit der mehreren Bewegungsvorrichtungen (30) in einem Rückführabschnitt der Führungsbahn (28), in dem die mehreren Bewegungsvorrichtungen (30) zum erneuten Überführen mehrerer Behälter rückgeführt werden, erhöht wird.

8. Vorrichtung (10, 52) nach einem der vorherigen Ansprüche, wobei:
die Vorrichtung (10, 52) ferner eine Gruppiervorrichtung (38) aufweist, die stromabwärts der Transferfördereinrichtung (14) angeordnet ist und mehrere, vorzugsweise ketten-, riemen- oder linearmotorgetriebene, Schubbalken (40) zum Gruppieren der mehreren Behälter auf der Auslauffördereinrichtung (16) aufweist; und/oder
die Einlauffördereinrichtung (12, 54) mindestens eine Einteilvorrichtung (22, 50) zum Vorgeben einer voreingestellten Teilung der Behälter des Behältereinlaufstroms (18, 46) aufweist, wobei vorzugsweise die mindestens eine Einteilvorrichtung (22, 50) als eine Einteilschnecke ausgeführt ist oder mehrere mittels Langstator-Linearmotorsystem individuell antreibbare Einteilelemente aufweist.

9. Vorrichtung (10, 52) nach einem der vorherigen Ansprüche, wobei:
die Einlauffördereinrichtung (12) einspurig ausgeführt ist; oder
die Einlauffördereinrichtung (54) mehrspurig ausgeführt ist, wobei vorzugsweise der einspurige Behältereinlaufstrom (18, 46) wechselbar über die mehrspurige Einlauffördereinrichtung (54) ist.

10. Vorrichtung (52) nach einem der vorherigen Ansprüche, ferner aufweisend:
einen ersten Zulaufförderer (56), vorzugsweise mit einem Behälterpuffer (60) und/oder einem Abschnitt (64) mit einem sich in einer Behälterströmungsrichtung verjüngenden Strömungsquerschnitt, wobei der erste Zulaufförderer (56) stromaufwärts der Einlauffördereinrichtung (54) angeordnet und an eine erste Spur der Einlauffördereinrichtung (54) angeschlossen ist; und
einen zweiten Zulaufförderer (58), vorzugsweise mit einem Behälterpuffer (62) und/oder einem Abschnitt (66) mit einem sich in einer Behälterströmungsrichtung verjüngenden Strömungsquerschnitt, wobei der zweite Zulaufförderer (58) stromaufwärts der Einlauffördereinrichtung (54) angeordnet und an eine zweite Spur der Einlauffördereinrichtung (54) angeschlossen ist.

11. Vorrichtung (52) nach Anspruch 10, ferner aufweisend:
eine Behälterbehandlungsvorrichtung (68), die stromaufwärts von dem ersten Zulaufförderer (56) und stromaufwärts von dem zweiten Zulaufförderer (58) angeordnet ist und einen Auslauf (70) zum wahlweisen Ausgeben von Behältern an den ersten Zulaufförderer (56) oder an den zweiten Zulaufförderer (58) aufweist; oder
eine erste Behälterbehandlungsvorrichtung (68), die stromaufwärts von dem ersten Zulaufförderer (56) angeordnet ist und einen Auslauf zum Ausgeben von Behältern an den ersten Zulaufförderer (56) aufweist, und eine zweite Behälterbehandlungsvorrichtung (76), die stromaufwärts von dem zweiten Zulaufförderer (58) angeordnet ist und einen Auslauf zum Ausgeben von Behältern an den zweiten Zulaufförderer (58) aufweist.

12. Verfahren zum Verteilen und/oder Gruppieren von Behältern in einer Behälterbehandlungsanlage, vorzugsweise zum Betreiben einer Vorrichtung (10, 52) nach einem der vorherigen Ansprüche, aufweisend:
Überführen jeweils mehrerer Behälter eines einspurigen Behältereinlaufstroms (18, 46) zu einem mehrspurigen Behälterauslaufstrom (24) mittels einer Transferfördereinrichtung (14), die eine Führungsbahn (28) und mehrere, vorzugsweise mittels eines Langstator-Linearmotors (32), individuell antreibbare Bewegungsvorrichtungen (30), die entlang der Führungsbahn (28) geführt sind, aufweist, wobei die mehreren Bewegungsvorrichtungen (30) ein Förderelement (34) aufweisen, das dazu ausgebildet ist, jeweils mehrere Behälter von dem einspurigen Behältereinlaufstrom (18, 46) zu dem mehrspurigen Behälterauslaufstrom (24) zu überführen, wobei die Behälter in dem mehrspurigen Behälterauslaufstrom (24) quer, vorzugsweise 90°, zum Behältereinlaufstrom (18, 46) abgefördert werden.

13. Verfahren nach Anspruch 12, wobei das Überführen aufweist:
Verzögern der jeweiligen Bewegungsvorrichtung beim Bewegen entlang der Führungsbahn (28) unmittelbar vor dem Kontaktieren der jeweils mehreren Behälter mittels des Förderelements (34), vorzugsweise zum Verringern eines Stoßes beim Kontaktieren der jeweils mehreren Behälter und/oder zum zumindest annähernd stoßfreien Kontaktieren der jeweils mehreren Behälter; und/oder
Beschleunigen der jeweiligen Bewegungsvorrichtung beim Bewegen entlang der Führungsbahn (28) während des Überführens der jeweils mehreren Behälter, vorzugsweise auf eine Fördergeschwindigkeit des Behälterauslaufstroms (24).

14. Verfahren nach Anspruch 12 oder Anspruch 13, wobei das Überführen aufweist:
rückseitiges Schieben und vorderseitiges Abstützen der mehreren Behälter beim Überführen durch die Förderelemente (34) von zwei, vorzugsweise aufeinanderfolgenden, Bewegungsvorrichtungen der mehreren Bewegungsvorrichtungen (30), die sich entlang der Führungsbahn (28) bewegen; und/oder
Einklemmen der mehreren Behälter beim Überführen durch die Förderelemente (34) von zwei, vorzugsweise aufeinanderfolgenden, Bewegungsvorrichtungen der mehreren Bewegungsvorrichtungen (30), die sich entlang der Führungsbahn (28) bewegen.

15. Verfahren nach einem der Ansprüche 12 bis 14, wobei das Überführen aufweist:
nachdem das Förderelement (34) einer vorlaufenden Bewegungsvorrichtung der mehreren Bewegungsvorrichtungen (30) die mehreren Behälter durch rückseitiges Schieben überführt hat, Rückbewegen der vorlaufenden Bewegungsvorrichtung entlang der Führungsbahn (28), bis das Förderelement (34) der vorlaufenden Bewegungsvorrichtung mehrere nachfolgende Behälter vorderseitig kontaktiert; und
vorderseitiges Abstützen der mehreren nachfolgenden Behälter durch das Förderelement (34) der vorlaufenden Bewegungsvorrichtung beim Bewegen entlang der Führungsbahn (28), während das Förderelement (34) einer nachlaufenden Bewegungsvorrichtung der mehreren Bewegungsvorrichtungen (30) beim Bewegen entlang der Führungsbahn (28) die mehreren nachfolgenden Behälter rückseitig schiebt.

16. Verfahren nach einem der Ansprüche 12 bis 15, wobei das Überführen aufweist:
Ausfahren des Förderelements (34) der jeweiligen Bewegungsvorrichtung entgegen dem Behältereinlaufstrom (18, 46) vor dem Kontaktieren der jeweils mehreren Behälter, vorzugsweise mittels einer Kulissenführung (36) und/oder einer Antriebseinheit; und
Behälterverzögerung in einer Einlaufförderrichtung mittels Einfahrens und Abbremsens des Förderelements (34) der jeweiligen Bewegungsvorrichtung entgegengesetzt zu dem Ausfahren bei einem rückseitigen Schieben der jeweils mehreren Behälter beim Bewegen der jeweiligen Bewegungsvorrichtung entlang der Führungsbahn (28), vorzugsweise mittels einer Kulissenführung (36) und/oder einer Antriebseinheit (44).

17. Verfahren nach einem der Ansprüche 12 bis 16, ferner aufweisend:
Gruppieren von mehreren Behältern im mehrspurigen Behälterauslaufstrom (24) durch die Förderelemente (34) von mindestens zwei, vorzugsweise aufeinanderfolgenden, Bewegungsvorrichtungen durch Bewegen der mindestens zwei Bewegungsvorrichtungen relativ zueinander entlang der Führungsbahn (28); und/oder
Vergrößern einer Teilung und/oder Erhöhen einer Geschwindigkeit der jeweiligen Bewegungsvorrichtungen in einem Rückführabschnitt der Führungsbahn (28) zum Rückführen der mehreren Bewegungsvorrichtungen (30) zum erneuten Überführen jeweils mehrerer Behälter; und/oder
Wechseln einer Spur des einspurigen Behältereinlaufstroms (18, 46) auf einer mehrspurigen Einlauffördereinrichtung (54); und/oder
Verändern einer Teilung des einspurigen Behältereinlaufstroms (18, 46) mittels individuell antreibbarer Einteilelemente einer Einteilvorrichtung; und/oder
Verändern eines Abstands zwischen Vorsprüngen der Förderelemente (34) bei einem Formatwechsel.

18. Verfahren nach einem der Ansprüche 12 bis 17, ferner aufweisend:
unterbrechungsfreies Wechseln einer Behälterzuführung zu der Transferfördereinrichtung (14) von einem ersten Zulaufförderer (56) zu einem zweiten Zulaufförderer (58), vorzugsweise zum Behältersortenwechsel; und optional:
Umrüsten des ersten Zulaufförderers (56) auf eine neue Behältersorte, während der zweite Zulaufförderer (58) Behälter zu der Transferfördereinrichtung (14) zuführt und/oder Umrüsten des zweiten Zulaufförderers (58) auf eine neue Behältersorte, während der erste Zulaufförderer (56) Behälter zu der Transferfördereinrichtung (14) zuführt.

## Claims

1. A device (10, 52) for distributing and/or grouping containers in a container treatment system, having:
an entry conveying apparatus (12, 54) which is configured to convey a multiplicity of containers in a single-track container entry stream (18, 46);
an exit conveying apparatus (16) which is configured to discharge the containers in a multiple-track container exit stream (24) transverse, preferably 90°, to the container entry stream (18, 46) or the entry conveying apparatus (12, 54); and
a transfer conveying apparatus (14) which has a guide track (28) and a plurality of movement devices (30) which can be driven individually, preferably by a long stator linear motor (32), and are guided along the guide track (28), the plurality of movement devices (30) having a conveying element (34) which is configured to transfer in each case a plurality of containers from the entry conveying apparatus (12, 54) to the exit conveying apparatus (16).

2. The device (10, 52) as claimed in claim 1:
the conveying elements (34) being configured in each case to push a plurality of containers on the rear side and/or to support them on the front side during the transfer; and/or
it being possible for the conveying elements (34) to be retracted and extended parallel to the container entry stream (18, 46) for container retardation in an entry conveying direction of the entry conveying apparatus (12, 54), preferably at least partially by a slotted guide (36) and/or by a drive unit (44); and/or
the conveying elements (34) being configured as divider bars, preferably with a plurality of projections which are arranged at a predefined or adjustable spacing from one another.

3. The device (10, 52) as claimed in claim 1 or claim 2, having, furthermore:
a control unit (42) which is set up for the operation of the entry conveying apparatus (12, 54), the transfer conveying apparatus (14), the exit conveying apparatus (16), the plurality of movement devices (30) and/or the long stator linear motor (32).

4. The device (10, 52) as claimed in claim 3, the control unit (42) being set up to move the plurality of movement devices (30) along the guide track (28) in such a way that:
the plurality of movement devices (30) are retarded directly before the contacting of the plurality of containers by the conveying element (34), preferably in order to reduce a jolt in the case of the contacting of the plurality of containers and/or for the at least approximately jolt-free contacting of the plurality of containers; and/or
the plurality of movement devices (30) are accelerated in the case of the transfer of the plurality of containers, preferably to a conveying speed of the exit conveying apparatus (16).

5. The device (10, 52) as claimed in claim 3 or claim 4, the control unit (42) being set up to move the plurality of movement devices (30) along the guide track (28) in such a way that:
the conveying elements (34) of two movement devices, which preferably follow one another, of the plurality of movement devices (30) push the plurality of containers on the rear side and support them on the front side during the transfer; and/or
the conveying elements (34) of two movement devices, which preferably follow one another, of the plurality of movement devices (30) clamp the plurality of containers between them during the transfer.

6. The device (10, 52) as claimed in one of claims 3 to 5, the control unit (42) being set up to move the plurality of movement devices (30) along the guide track (28) in such a way that:
a leading movement device of the plurality of movement devices (30) is moved back along the guide track (28), after the transfer of the plurality of containers by pushing on the rear side by way of the conveying element (34) of the leading movement device, until the conveying element (34) of the leading movement device makes contact on the front side with a plurality of following containers; and,
during the transfer of the plurality of following containers, the conveying element (34) of the leading movement device supports the plurality of following containers on the front side, and the conveying element (34) of a trailing movement device of the plurality of movement devices (30) pushes the plurality of following containers on the rear side.

7. The device (10, 52) as claimed in one of claims 3 to 6, the control unit (42) being set up to move the plurality of movement devices (30) along the guide track (28) in such a way that:
at least two movement devices, which follow one another, of the plurality of movement devices (30) are moved along the guide track (28) relative to one another in such a way that the conveying elements (34) of the at least two movement devices group a plurality of container rows in the multiple-track container exit stream (24); and/or
a spacing and/or a speed of the plurality of movement devices (30) are/is increased in a return section of the guide track (28), in which return section the plurality of movement devices (30) are returned for the renewed transfer of a plurality of containers.

8. The device (10, 52) as claimed in one of the preceding claims:
the device (10, 52) having, furthermore, a grouping device (38) which is arranged downstream of the transfer conveying apparatus (14) and has a plurality of push bars (40), preferably driven by chain, belt or linear motor, for grouping the plurality of containers on the exit conveying apparatus (16); and/or
the entry conveying apparatus (12, 54) having at least one dividing device (22, 50) for specifying a preset spacing of the containers of the container entry stream (18, 46), the at least one dividing device (22, 50) preferably being configured as a dividing worm or having a plurality of dividing elements which can be driven individually by a long stator linear motor system.

9. The device (10, 52) as claimed in one of the preceding claims:
the entry conveying apparatus (12) being of single-track configuration; or
the entry conveying apparatus (54) being of multiple-track configuration, it preferably being possible for the single-track container entry stream (18, 46) to be switched via the multiple-track entry conveying apparatus (54).

10. The device (52) as claimed in one of the preceding claims, having, furthermore:
a first entry conveyor (56), preferably with a container buffer store (60) and/or a section (64) with a stream cross section which tapers in a container stream direction, the first entry conveyor (56) being arranged upstream of the entry conveying apparatus (54) and being connected to a first track of the entry conveying apparatus (54); and
a second entry conveyor (58), preferably with a container buffer store (62) and/or a section (66) with a stream cross section which tapers in a container stream direction, the second entry conveyor (58) being arranged upstream of the entry conveying apparatus (54) and being connected to a second track of the entry conveying apparatus (54).

11. The device (52) as claimed in claim 10, having, furthermore:
a container treatment device (68) which is arranged upstream of the first entry conveyor (56) and upstream of the second entry conveyor (58), and has an exit (70) for the selective output of containers to the first entry conveyor (56) or to the second entry conveyor (58); or
a first container treatment device (68) which is arranged upstream of the first entry conveyor (56) and has an exit for the output of containers to the first entry conveyor (56), and a second container treatment device (76) which is arranged upstream of the second entry conveyor (58) and has an exit for the output of containers to the second entry conveyor (58).

12. A method for distributing and/or grouping containers in a container treatment system, preferably for operating a device (10, 52) as claimed in one of the preceding claims, comprising:
transferring in each case of a plurality of containers of a single-track container entry stream (18, 46) to a multiple-track container exit stream (24) by a transfer conveying apparatus (14) which has a guide track (28) and a plurality of movement devices (30) which can be driven individually, preferably by a long stator linear motor (32) and are guided along the guide track (28), the plurality of movement devices (30) having a conveying element (34) which is configured to transfer in each case a plurality of containers from the single-track container entry stream (18, 46) to the multiple-track container exit stream (24), wherein the containers in the multiple-track container exit stream (24) are discharged transversely, preferably 90°, to the container entry stream (18, 46).

13. The method as claimed in claim 12, the transferring comprising:
retarding of the respective movement device during the movement along the guide track (28) directly before contacting of the respective plurality of containers by the conveying element (34), preferably in order to decrease a jolt during the contacting of the respective plurality of containers and/or for the at least approximately jolt-free contacting of the respective plurality of containers; and/or
accelerating of the respective movement device during the movement along the guide track (28) during the transfer of the respective plurality of containers, preferably to a conveying speed of the container exit stream (24).

14. The method as claimed in claim 12 or claim 13, the transferring comprising:
rear-side pushing and front-side supporting of the plurality of containers during the transfer by way of the conveying elements (34) of two movement devices, which preferably follow one another, of the plurality of movement devices (30) which move along the guide track (28); and/or
clamping of the plurality of containers during the transfer by way of the conveying elements (34) of two movement devices, which preferably follow one another, of the plurality of movement devices (30) which move along the guide track (28).

15. The method as claimed in one of claims 12 to 14, the transferring comprising:
after the conveying element (34) of a leading movement device of the plurality of movement devices (30) has transferred the plurality of containers by way of rear-side pushing, moving back of the leading movement device along the guide track (28) until the conveying element (34) of the leading movement device contacts a plurality of following containers on the front side; and
front-side supporting of the plurality of following containers by way of the conveying element (34) of the leading movement device during the movement along the guide track (28), while the conveying element (34) of a trailing movement device of the plurality of movement devices (30) pushes the plurality of following containers on the rear side during the movement along the guide track (28).

16. The method as claimed in one of claims 12 to 15, the transferring comprising:
extending of the conveying element (34) of the respective movement device counter to the container entry stream (18, 46) before contacting of the respective plurality of containers, preferably by a slotted guide (36) and/or a drive unit; and
container retarding in an entry conveying direction by means of retracting and braking of the conveying element (34) of the respective movement device in a manner which is opposed with respect to the extending in the case of rear-side pushing of the respective plurality of containers during the moving of the respective movement device along the guide track (28), preferably by a slotted guide (36) and/or a drive unit (44).

17. The method as claimed in one of claims 12 to 16, comprising, furthermore:
grouping of a plurality of containers in the multiple-track container exit stream (24) by way of the conveying elements (34) of at least two movement devices, which preferably follow one another, by way of movement of the at least two movement devices relative to one another along the guide track (28); and/or
enlarging of a spacing and/or increasing a speed of the respective movement devices in a return section of the guide track (28) for the return of the plurality of movement devices (30) for the renewed transfer of in each case a plurality of containers; and/or
shifting of a track of the single-track container entry stream (18, 46) on a multiple-track entry conveying apparatus (54); and/or
changing of a spacing of the single-track container entry stream (18, 46) by individually drivable dividing elements of a dividing device; and/or
changing of a spacing between projections of the conveying elements (34) in the case of a format change.

18. The method as claimed in one of claims 12 to 17, comprising, furthermore:
interruption-free shifting of a container feed to the transfer conveying apparatus (14) from a first entry conveyor (56) to a second entry conveyor (58), preferably in order to change the container sort; and optionally:
changing over of the first entry conveyor (56) to a new container sort, while the second entry conveyor (58) feeds containers to the transfer conveying apparatus (14), and/or changing over of the second entry conveyor (58) to a new container sort, while the first entry conveyor (56) feeds containers to the transfer conveying apparatus (14).

## Revendications

1. Dispositif (10, 52) permettant de répartir et/ou de regrouper des récipients dans une installation de traitement de récipients, présentant :
un appareil de transport d'entrée (12, 54) qui est conçu pour transporter une pluralité de récipients dans un flux d'entrée de récipients (18, 46) à une voie ;
un appareil de transport de sortie (16) qui est conçu pour évacuer les récipients dans un flux de sortie de récipients (24) à plusieurs voies transversalement, de préférence à 90°, par rapport au flux d'entrée de récipients (18, 46) ou à l'appareil de transport d'entrée (12, 54) ; et
un appareil de transport de transfert (14) qui présente une piste de guidage (28) et plusieurs dispositifs de déplacement (30) pouvant être entraînés individuellement, de préférence au moyen d'un moteur linéaire à stator long (32), lesquels sont guidés le long de la piste de guidage (28), dans lequel les dispositifs de déplacement (30) présentent un élément de transport (34) qui est conçu pour transférer respectivement plusieurs récipients de l'appareil de transport d'entrée (12, 54) vers l'appareil de transport de sortie (16).

2. Dispositif (10, 52) selon la revendication 1, dans lequel :
les éléments de transport (34) sont conçus pour pousser côté arrière et/ou pour soutenir côté avant respectivement plusieurs récipients lors du transfert ; et/ou
les éléments de transport (34) peuvent être rentrés et sortis pour retarder les récipients dans une direction de transport d'entrée de l'appareil de transport d'entrée (12, 54) parallèlement au flux d'entrée de récipients (18, 46), de préférence au moins partiellement au moyen d'un guidage à coulisse (36) et/ou au moyen d'une unité d'entraînement (44) ; et/ou
les éléments de transport (34) sont conçus comme des barres en une seule pièce, de préférence comportant plusieurs saillies disposées à une distance prédéterminée ou réglable les unes par rapport aux autres.

3. Dispositif (10, 52) selon la revendication 1 ou la revendication 2, présentant en outre :
une unité de commande (42) qui est configurée pour faire fonctionner l'appareil de transport d'entrée (12, 54), l'appareil de transport de transfert (14), l'appareil de transport de sortie (16), les dispositifs de déplacement (30) et/ou le moteur linéaire à stator long (32).

4. Dispositif (10, 52) selon la revendication 3, dans lequel l'unité de commande (42) est configurée pour déplacer les dispositifs de déplacement (30) le long de la piste de guidage (28) de sorte que :
les dispositifs de déplacement (30) sont ralentis directement avant la mise en contact avec les récipients au moyen de l'élément de transport (34), de préférence pour réduire un choc lors de la mise en contact avec les récipients et/ou pour entrer en contact avec les récipients au moins approximativement sans choc ; et/ou
les dispositifs de déplacement (30) sont accélérés lors du transfert des récipients, de préférence jusqu'à une vitesse de transport de l'appareil de transport de sortie (16).

5. Dispositif (10, 52) selon la revendication 3 ou la revendication 4, dans lequel l'unité de commande (42) est configurée pour déplacer les dispositifs de déplacement (30) le long de la piste de guidage (28) de sorte que :
les éléments de transport (34) de deux dispositifs de déplacement, de préférence successifs, parmi les dispositifs de déplacement (30) poussent côté arrière et soutiennent côté avant les récipients lors du transfert ; et/ou
les éléments de transport (34) de deux dispositifs de déplacement, de préférence successifs, parmi les dispositifs de déplacement (30) serrent entre eux les récipients lors du transfert.

6. Dispositif (10, 52) selon l'une des revendications 3 à 5, dans lequel l'unité de commande (42) est configurée pour déplacer les dispositifs de déplacement (30) le long de la piste de guidage (28) de sorte que :
un dispositif de déplacement allant vers l'avant parmi les dispositifs de déplacement (30) est déplacé vers l'arrière le long de la piste de guidage (28) après le transfert des récipients au moyen de la poussée côté arrière par l'élément de transport (34) du dispositif de déplacement allant vers l'avant, jusqu'à ce que l'élément de transport (34) du dispositif de déplacement allant vers l'avant entre en contact avec plusieurs récipients successifs côté avant ; et
lors du transfert des récipients successifs, l'élément de transport (34) du dispositif de déplacement allant vers l'avant soutient les récipients successifs côté avant et l'élément de transport (34) d'un dispositif de déplacement allant vers l'arrière parmi les dispositifs de déplacement (30) pousse les récipients successifs côté arrière.

7. Dispositif (10, 52) selon l'une des revendications 3 à 6, dans lequel l'unité de commande (42) est configurée pour déplacer les dispositifs de déplacement (30) le long de la piste de guidage (28) de sorte que :
au moins deux dispositifs de déplacement successifs parmi les dispositifs de déplacement (30) sont déplacés l'un par rapport à l'autre le long de la piste de guidage (28), de sorte que les éléments de transport (34) des au moins deux dispositifs de déplacement regroupent plusieurs rangées de récipients dans le flux de sortie de récipients (24) à plusieurs voies ; et/ou
un pas et/ou une vitesse des dispositifs de déplacement (30) sont augmentés dans une section de retour de la piste de guidage (28), dans laquelle section de retour les dispositifs de déplacement (30) sont ramenés pour transférer à nouveau plusieurs récipients.

8. Dispositif (10, 52) selon l'une des revendications précédentes, dans lequel :
le dispositif (10, 52) présente en outre un dispositif de regroupement (38) qui est disposé en aval de l'appareil de transport de transfert (14) et qui présente plusieurs barres de poussée (40), de préférence entraînées par une chaîne, une courroie ou un moteur linéaire, pour regrouper les récipients sur l'appareil de transport de sortie (16) ; et/ou
l'appareil de transport d'entrée (12, 54) présente au moins un dispositif de réglage de pas (22, 50) permettant de prédéfinir un pas préréglé des récipients du flux d'entrée de récipients (18, 46), dans lequel, de préférence, l'au moins un dispositif de réglage de pas (22, 50) est conçu sous forme de vis sans fin de réglage de pas ou présente plusieurs éléments de réglage de pas pouvant être entraînés individuellement au moyen d'un système de moteur linéaire à stator long.

9. Dispositif (10, 52) selon l'une des revendications précédentes, dans lequel :
l'appareil de transport d'entrée (12) est conçu avec une seule voie ; ou
l'appareil de transport d'entrée (54) est conçu avec plusieurs voies, dans lequel, de préférence, le flux d'entrée de récipients (18, 46) à une voie est interchangeable par l'intermédiaire de l'appareil de transport d'entrée (54) à plusieurs voies.

10. Dispositif (52) selon l'une des revendications précédentes, présentant en outre :
un premier transporteur d'alimentation (56), de préférence comportant un tampon pour récipient (60) et/ou une section (64) comportant une section transversale d'écoulement se rétrécissant dans une direction d'écoulement de récipient, dans lequel le premier transporteur d'alimentation (56) est disposé en amont de l'appareil de transport d'entrée (54) et est raccordé à une première voie de l'appareil de transport d'entrée (54) ; et
un second transporteur d'alimentation (58), de préférence comportant un tampon pour récipient (62) et/ou une section (66) comportant une section transversale d'écoulement se rétrécissant dans une direction d'écoulement de récipient, dans lequel le second transporteur d'alimentation (58) est disposé en amont de l'appareil de transport d'entrée (54) et est raccordé à une seconde voie de l'appareil de transport d'entrée (54).

11. Dispositif (52) selon la revendication 10, présentant en outre :
un dispositif de traitement de récipients (68) qui est disposé en amont du premier transporteur d'alimentation (56) et en amont du second transporteur d'alimentation (58) et qui présente une sortie (70) pour la distribution de manière sélective de récipients au premier transporteur d'alimentation (56) ou au second transporteur d'alimentation (58) ; ou
un premier dispositif de traitement de récipients (68) qui est disposé en amont du premier transporteur d'alimentation (56) et qui présente une sortie pour la distribution de récipients au premier transporteur d'alimentation (56), et un second dispositif de traitement de récipients (76) qui est disposé en amont du second transporteur d'alimentation (58) et qui présente une sortie pour la distribution de récipients au second transporteur d'alimentation (58).

12. Procédé permettant de répartir et/ou de regrouper des récipients dans une installation de traitement de récipients, de préférence permettant de faire fonctionner un dispositif (10, 52) selon l'une des revendications précédentes, présentant :
le transfert de respectivement plusieurs récipients d'un flux d'entrée de récipients (18, 46) à une voie vers un flux de sortie de récipients (24) à plusieurs voies au moyen d'un appareil de transport de transfert (14) qui présente une piste de guidage (28) et plusieurs dispositifs de déplacement (30) pouvant être entraînés individuellement, de préférence au moyen d'un moteur linéaire à stator long (32), lesquels dispositifs de déplacement sont guidés le long de la piste de guidage (28), dans lequel les dispositifs de déplacement (30) présentent un élément de transport (34) qui est conçu pour transférer respectivement plusieurs récipients du flux d'entrée de récipients (18, 46) à une voie vers le flux de sortie de récipients (24) à plusieurs voies, dans lequel les récipients sont évacués dans le flux de sortie de récipients (24) à plusieurs voies transversalement, de préférence à 90°, par rapport au flux d'entrée de récipients (18, 46).

13. Procédé selon la revendication 12, dans lequel le transfert présente :
le ralentissement du dispositif de déplacement respectif lors du déplacement le long de la piste de guidage (28) immédiatement avant la mise en contact avec les récipients respectifs au moyen de l'élément de transport (34), de préférence pour réduire un choc lors de la mise en contact avec les récipients respectifs et/ou pour entrer en contact avec les récipients respectifs au moins approximativement sans choc ; et/ou
l'accélération du dispositif de déplacement respectif lors du déplacement le long de la piste de guidage (28) pendant le transfert des récipients respectifs, de préférence jusqu'à une vitesse de transport du flux de sortie de récipients (24).

14. Procédé selon la revendication 12 ou la revendication 13, dans lequel le transfert présente :
la poussée côté arrière et le soutien côté avant des récipients lors du transfert au moyen des éléments de transport (34) de deux dispositifs de déplacement, de préférence successifs, parmi les dispositifs de déplacement (30) qui se déplacent le long de la piste de guidage (28) ; et/ou
le serrage des récipients lors du transfert au moyen des éléments de transport (34) de deux dispositifs de déplacement, de préférence successifs, parmi les dispositifs de déplacement (30) qui se déplacent le long de la piste de guidage (28).

15. Procédé selon l'une des revendications 12 à 14, dans lequel le transfert présente :
après que l'élément de transport (34) d'un dispositif de déplacement allant vers l'avant parmi les dispositifs de déplacement (30) a transféré les récipients en les poussant côté arrière, le déplacement vers l'arrière du dispositif de déplacement allant vers l'avant le long de la piste de guidage (28) jusqu'à ce que l'élément de transport (34) du dispositif de déplacement allant vers l'avant entre en contact avec plusieurs récipients successifs côté avant ; et
le soutien côté avant des récipients successifs au moyen de l'élément de transport (34) du dispositif de déplacement allant vers l'avant lors du déplacement le long de la piste de guidage (28), pendant que l'élément de transport (34) d'un dispositif de déplacement allant vers l'arrière parmi les dispositifs de déplacement (30) pousse les récipients successifs côté arrière lors du déplacement le long de la piste de guidage (28).

16. Procédé selon l'une des revendications 12 à 15, dans lequel le transfert présente :
le déploiement de l'élément de transport (34) du dispositif de déplacement respectif à l'encontre du flux d'entrée de récipients (18, 46) avant la mise en contact avec les récipients respectifs, de préférence au moyen d'un guidage à coulisse (36) et/ou d'une unité d'entraînement ; et
le retardement des récipients dans une direction de transport d'entrée au moyen d'une rétraction et d'un freinage de l'élément de transport (34) du dispositif de déplacement respectif en sens inverse par rapport au déploiement lors d'une poussée côté arrière des récipients respectifs lors du déplacement du dispositif de déplacement respectif le long de la piste de guidage (28), de préférence au moyen d'un guidage à coulisse (36) et/ou d'une unité d'entraînement (44).

17. Procédé selon l'une des revendications 12 à 16, présentant en outre :
le regroupement de plusieurs récipients dans le flux de sortie de récipients (24) à plusieurs voies au moyen des éléments de transport (34) d'au moins deux dispositifs de déplacement, de préférence successifs, en déplaçant les au moins deux dispositifs de déplacement les uns par rapport aux autres le long de la piste de guidage (28) ; et/ou
l'agrandissement d'un pas et/ou l'augmentation d'une vitesse des dispositifs de déplacement respectifs dans une section de retour de la piste de guidage (28) pour ramener les dispositifs de déplacement (30) pour transférer à nouveau respectivement plusieurs récipients ; et/ou
le changement d'une voie du flux d'entrée de récipients (18, 46) à une voie sur un appareil de transport d'entrée (54) à plusieurs voies ; et/ou
la modification d'un pas du flux d'entrée de récipients (18, 46) à une voie au moyen d'éléments de réglage de pas pouvant être entraînés individuellement d'un dispositif de réglage de pas ; et/ou
la modification d'une distance entre des saillies des éléments de transport (34) lors d'un changement de format.

18. Procédé selon l'une des revendications 12 à 17, présentant en outre :
le changement sans interruption d'une amenée de récipients vers l'appareil de transport de transfert (14) d'un premier transporteur d'alimentation (56) à un second transporteur d'alimentation (58), de préférence pour le changement de type de récipient ; et éventuellement :
le rééquipement du premier transporteur d'alimentation (56) pour un nouveau type de récipient pendant que le second transporteur d'alimentation (58) amène des récipients à l'appareil de transport de transfert (14) et/ou le rééquipement du second transporteur d'alimentation (58) pour un nouveau type de récipient pendant que le premier transporteur d'alimentation (56) amène des récipients à l'appareil de transport de transfert (14).
